# EUROPEAN PATENT APPLICATION

(11) **EP 1 061 708 A2**
(43) Date of publication of application: **20.12.2000**
(21) Application number: 00112585.5
(22) Date of filing: 14.06.2000
(51) Int. Cl.: H04L 29/06, H04L 12/28

(54) **An external device control apparatus and an external device control method**

(30) Priority: 18.06.1999 JP 17300399
(71) Applicant: SONY CORPORATION, Tokyo (JP)
(72) Inventor: Ogihara, Yuji, Shinagawa-ku, Tokyo (JP); Goto, Takashi, Shinagawa-ku, Tokyo (JP)
(74) Representative: Körber, Wolfhart, Dr.

(57) **Abstract**

An external device control apparatus capable of executing a predetermined control operation on one or more predetermined external devices interconnected via a data bus compliant with a predetermined communication format, including abstraction control program holding means for holding a first control program for controlling the one or more predetermined external devices, the first control program being defined as an abstracted entity, connected device detecting means for detecting a target external device controllable by the control apparatus, the target external device existing on the data bus, and control program substantiating means for creating a second control program for controlling the target external device detected by the connected device detecting means, by use of the first control program, the second control program being defined as a substantiated entity.

## Description

### BACKGROUND OF THE INVENTION

The present invention relates generally to a control apparatus and a control method for controlling external devices in a system where various devices are interconnected through a predetermined data interface such as IEEE 1394 for example.

Recording/reproducing devices that use a magneto-optical disc or a magnetic tape for digitally recording an audio signal are known for recording/reproducing music and other information. One of these devices is a Mini Disc recording/reproducing device compliant with a magneto-optical disc called a Mini Disc.

The Mini Disc is recorded with control information called a user-TOC (hereinafter referred to as a U-TOC), separately from the main data such as music, for controlling an area to which a user recorded information (namely, a data recorded area) and an area with nothing recorded (namely, a data recordable unrecorded area). The recording device references this U-TOC to determine the area on which information is to be recorded, while the reproducing device also references the U-TOC to determine an area from which information is to be reproduced.

To be specific, the U-TOC controls recorded music for example in the data unit called a track, the start and end addresses for example of the recorded music being recorded in the U-TOC. The U-TOC controls the unrecorded area (or a free area) as a data recordable area, its start and end address being recorded in the U-TOC.

In addition, controlling these areas on a Mini Disc by the U-TOC allows the user to easily and quickly edit processing such as dividing, combining, moving (changing track numbers), and erasing tracks of recorded data such as music only by updating the U-TOC.

Further, the U-TOC also has a area in which the title of that disc (the disc name) and the titles of music programs (track names) can be recorded as character information. Consequently, the user can execute edit processing such as entering the disc name and track names.

As the above-mentioned Mini Disc recording/reproducing device, control systems are known having a control terminal dedicated to the connection with a personal computer. When the control system is connected to a personal computer through this control terminal, the user can operates the personal computer to execute processing associated with recording and reproducing a Mini Disc and editing operations.

For the conventional control systems, a data interface specialized for the Mini Disc recording/reproducing device is employed. Basically, a personal computer and the Mini Disc recording/reproducing device are connected each other in a one-to-one relation in the conventional control systems. These control systems are constructed by installing application software, on the personal computer, for controlling the Mini Disc recording/reproducing device.

With these control systems, the user can operate the Mini Disc recording/reproducing device through GUI provided by the application software for controlling the Mini Disc recording/reproducing device. This provides an easier-to-use operating environment to users than requiring them to operate various controls (or a dedicated remote controller) arranged on the Mini Disc recording/reproducing device for example.

However, the above-mentioned conventional control systems have a problem that, because these systems assumes the connection of a personal computer and a Mini Disc recording/reproducing device through a dedicated line on a one-to-one basis, it is difficult to make system expansion so that plural external devices such as Mini Disc recording/reproducing devices can be controlled by a single personal computer. Another problem is that, even if such an expansion has been achieved, the configuration of conventional control systems is required to start a remote control program for each device to be controlled, thereby increasing the processing load of the personal computer.

### SUMMARY OF THE INVENTION

It is therefore an object of the present invention to provide a control apparatus which facilitates the control of a plurality of audio devices and a control method for the control apparatus.

In carrying out the invention and according to one aspect thereof, there is provided an external device control apparatus capable of executing a predetermined control operation on one or more predetermined external devices interconnected via a data bus compliant with a predetermined communication format, including: abstraction control program holding means for holding a first control program for controlling the one or more predetermined external devices, the first control program being defined as an abstracted entity; connected device detecting means for detecting a target external device controllable by the control apparatus, the target external device existing on the data bus; and control program substantiating means for creating a second control program for controlling the target external device detected by the connected device detecting means, by use of the first control program, the second control program being defined as a substantiated entity.

In carrying out the invention and according to another aspect thereof, there is provided an external device control method for an external device control apparatus capable of executing a predetermined control operation on one or more predetermined external devices interconnected via a data bus compliant with a predetermined communication format, including the steps of holding a first control program for controlling the one or mere predetermined external devices, the first control program being defined as an abstracted entity; detecting a target external device controllable by the control apparatus, the target external device existing on the data bus; and creating a second control program for controlling the target external device detected in the connected device detecting step, by use of the first control program, the second control program being defined as a substantiated entity.

As shown in the above-mentioned configuration, as a control program for controlling external devices, a first control program defined as an abstracted entity is prepared. This can be understood as a model of the control program. Then, by use of this first control program, a second control program is created for each external device to be controlled which has been detected as existent on a data bus. The second control program is a substantiated control program which actually sends a control command to an external device to be controlled.

In the above-mentioned configuration, the substantial program for controlling external devices for example is not prepared beforehand but is created every time an external device to be controlled is detected on the data bus.

The above and other features and advantages of the present invention will, become apparent from the following description which will be given with reference to the illustrative accompanying drawings.

### BRIEF DESCRIPTION OF THE DRAWINGS

FIG. 1 is a block diagram illustrating an exemplary system configuration of one embodiment of the invention;
FIG. 2 is a block diagram illustrating a configuration of an MD recorder/player;
FIG. 3 is a block diagram illustrating an exemplary configuration of a personal computer;
FIG. 4 is a diagram illustrating a stack model of IEEE 1394 corresponding to the present embodiment;
FIG. 5 is a diagram illustrating a structure of a cable for use in IEEE 1394;
FIG. 6A is a timing chart of a DATA signal transmitted over an IEEE 1394 bus;
FIG. 6B is a timing chart or a STROBE signal transmitted over the IEEE 1394 bus;
FIG. 6C is a timing chart of a CLOCK signal transmitted over the IEEE 1394 bus;
FIG. 7 is a diagram illustrating bus connection specifications in IEEE 1394;
FIG. 8A is a transition diagram explaining how a bus reset notice is transmitted upon generation of a bus reset;
FIG. 8B is a transition diagram explaining how parent-child(ren) relations are defined between devices after a bus reset;
FIG. 8C is a transition diagram explaining how Node IDs of devices are determined;
FIG. 9 is a diagram illustrating an outline of packet transmission in IEEE 1394;
FIG. 10A is a transition diagram showing basic transaction rules on asynchronous communication;
FIG. 10B is a table listing contents of transmitted transaction requests;
FIG. 11A is a schematic view of a data structure in a bus address register for an IEEE 1394 bus;
FIG. 11B is a schematic view of a data structure of bus IDs for identifying IEEE 1394 buses;
FIG. 11C is a schematic view of a data structure of Node IDs assigned to devices connected to an IEEE 1394 bus arrangement;
FIG. 11D is a schematic view of a register space data structure for an IEEE 1394 bus;
FIG. 11E is a schematic view of a register address data structure for an IEEE 1394 bus;
FIG. 12 is a diagram illustrating a CIP structure;
FIG. 13 is a diagram illustrating an exemplary connection relationship specified by a plug;
FIG. 14A is a schematic view a data structure in an output plug control register oPCR[n];
FIG. 14B is a schematic view of a data structure in an input plug control register iPCR[n];
FIG. 15 is a processing transition diagram illustrating a write transaction specified in asynchronous communication;
FIG. 16 is a diagram illustrating a structure of an asynchronous packet (an AV/C command packet);
FIG. 17 is a diagram illustrating definition Contents of ctype/response in an asynchronous packet;
FIG. 18A is a table of a subunit-type data structure;
FIG. 18B is a table of commands in an operation code used when the subunit-type is a VCR;
FIG. 19 is a diagram illustrating a plug structure in asynchronous communication;
FIG. 20A is a view of a data structure in connection with locations of plug address spaces;
FIG. 20B is a view of a node offset data structure with regard to locations of plug address spaces;
FIG. 20c is a view of a plug data structure associated with locations of plug address spaces;
FIG. 21A is a view of a data structure in a plug address;
FIG. 21B is a view of a data structure constituting a register in a plug address;
FIG. 21C is an address offset table;
FIG. 22A is a data structure constituting a register in a plug address on the producer side;
FIG. 22B is a data structure constituting a register in a plug address on the consumer aide;
FIG. 23 is a diagram illustrating a transmission protocol as asynchronous connection;
FIG. 24 is a diagram illustrating a structure of object in OOPS;
FIG. 25 is a diagram illustrating a configuration of a control program practiced as one embodiment of the invention;
FIG. 26 is a diagram illustrating definition contents of an operation object (class);
FIG. 27 is a diagram illustrating definition contents of a device managing object (class);
FIG. 28 is a diagram illustrating definition contents of an audio device object;
FIG. 29 is a diagram illustrating a processing flow of the control program for a PLAY command; and
FIG. 30 is a flowchart indicative of a processing operation for creating an audio device object.

### DETAILED DESCRIPTION OF PREFERRED EMBODIMENTS

This invention will be described in further detail by way of example with reference to the accompanying drawings. The following description will be made in the order as shown:

### 1. System configuration

1-1 Overall configuration
1-2 MD recorder/player
1-3 Personal computer

### 2. IEEE 1394 format

2-1 Overview
2-2 Stack model
2-3 Signal transmission forms
2-4 Device-to-device bus connection
2-5 Packet
2-6 Transaction rules
2-7 Addressing
2-8 CIP (Common Isochronous Packet)
2-9 Connection management
2-10 Commands and responses under FCP
2-11 AV/C command packet
2-12 Plugs
2-13 Asynchronous Connection Transmission

### Procedures

### 3. Control program

3-1 Overview
3-2 Configuration of control program
3-3 Processing operation

### 1. System configuration

### 1-1 Overall configuration

The description of the embodiments of the invention will be made by use for example of an AV system capable of transferring data over a data bus compliant with IEEE 1394 data interface format.

This AV system has a personal computer and various audio devices, at least enabling the personal computer to control these audio devices (in a remote manner). The personal computer provided as this AV system is a control apparatus practiced as one embodiment of the invention for controlling external devices.

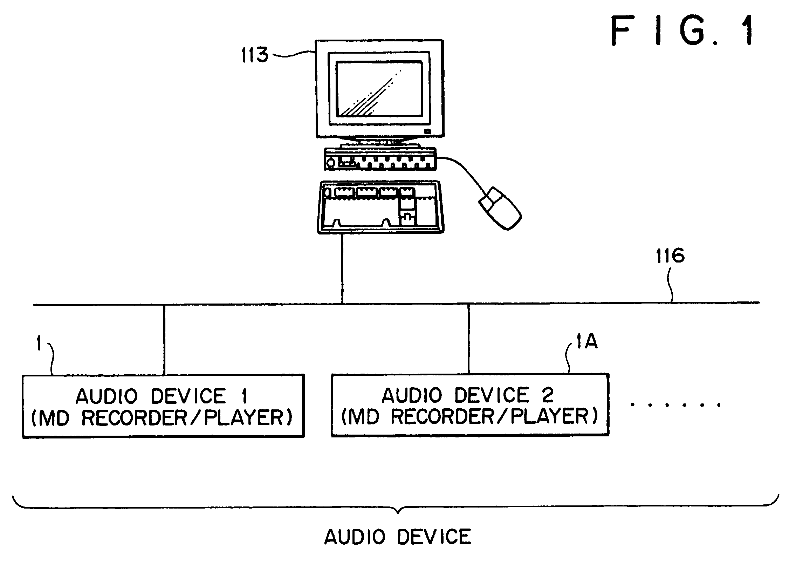

Now, referring to FIG. 1, there is shown an exemplary configuration of the AV system practiced as one embodiment of the invention connected by IEEE 1394 digital data interface.

The AV system in FIG. 1 has a personal computer 113 and two MD recorder/players 1 and 1A connected by a cable 601 compatible with the IEEE 1394 data interface. The connection allows the personal computer 113 and the MD recorders/players 1 and 1A to communicate with one another via an IEEE 1394 bus 116.

The MD recorders/players 1 and 1A are each a digital audio device capable of recording and reproducing audio data to and from a magneto-optical disc known as the Mini-disc (MD). Illustratively, the MD recorders/players 1 and 1A record to an MD digital audio data sent through the IEEE 1394 bus. The MD recorders/players 1 and 1A retrieve digital audio data from an MD and output the retrieved data over the bus IEEE 1394 bus 116.

Consequently, the system configuration shown in FIG. 1 for example allows a so-called dabbing operation in which the MD recorder/player 1A receives and records the audio data reproduced and outputted from the MD recorder/player 1 over the IEEE 1394 bus 116.

In this case especially, the audio date compressed by a predetermined format (called ATRAC scheme) are recorded on an MD. The dabbing between the MD recorders/players, the audio data may be transferred and dabbed in this compression format. The transfer of audio data in the compressed form requires only a narrow bus band, making this configuration advantageous in terms of data transmission efficiency.

The personal computer 113 receives via the IEEE 1394 bus 116 reproduced audio data from the MD recorder/player 1, and subjects the received data to audio output or to edit processing. The personal computer 113 is also capable of executing remote control under which the MD recorders/players 1 and 1A are controlled in recording or playback operations (including the above-mentioned dabbing operation for example). Namely, the personal computer 113 can remotely control the audio devices connected to the IEEE 1394 bus 116. The IEEE 1394 interface allows this remote control on plural bus-connected audio devices from the personal computer.

The above-mentioned capabilities are provided by installing the application software for realizing these capabilities for example onto the personal computer 113. The configuration of the personal computer installed with this application software characterized the present embodiment, which will be described later.

### 1-2 MD recorder/player

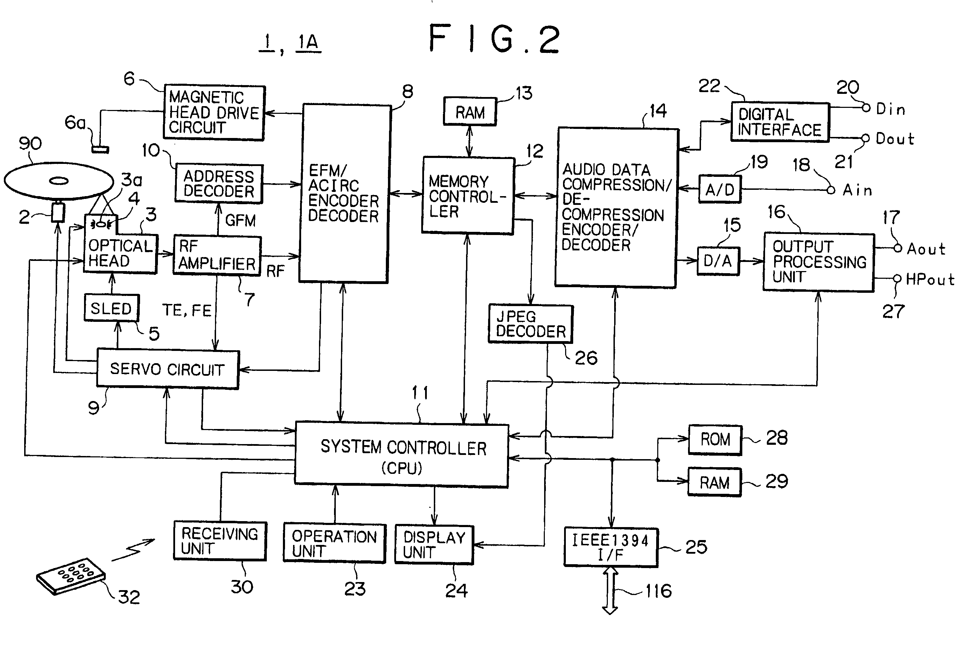

FIG. 2 depicts an internal structure of a recording and reproducing apparatus (MD player/recorder) 1 included in an AV system embodying the invention. It should be noted that the MD player/recorder 1A has the same structure.

A magneto-optical disc (Mini-disc) 90 with audio data scored thereon is rotated by a spindle motor 2. At the time of recording or playback, an optical head 3 emits a laser beam onto the magneto-optical disc 90.

For recording, the optical head 3 provides a high-level laser output to heat recording tracks of the disc up to the Curie temperature. For playback, the optical head 3 performs a laser output on a relatively low level to detect data from reflected light coming from the disc through the magnetic Kerr effect.

The optical head 3 has an optical system constituted by a laser diode, by a polarization beam splitter and by an object lens, as well as detectors for capturing reflected light. The object lens 3a is held by a two-axis mechanism 4 in a manner radially relocating over the disc surface and moving thereto and therefrom.

A magnetic head 6a is positioned in symmetric relation to the optical head 3 across the disc 90. In operation, the magnetic head 6a applies a magnetic field modulated by supplied data to the magneto-optical disc 90.

The optical head 3 as a whole and the magnetic head 6a are movable radially over the disc by a sled mechanism 5.

Upon playback, information retrieved from the disc 90 by the optical head 3 is supplied to an RF amplifier 7. In turn, the RF amplifier 7 processes the supplied information and extracts therefrom a reproduced RF signal, a tracking error signal TE, a focus error signal FE, and groove information GFM (absolute positional information recorded (in wobbling grooves) as pregrooves on the magneto-optical disc 90).

The reproduced RF signal thus extracted is sent to an EFM/ACIRC encoder/decoder 8. The tracking error signal TE and focus error signal FE are fed to a servo circuit 9. The groove information GFM is forwarded to an address decoder 10.

The servo circuit 9 generates various servo drive signals upon receipt of the tracking error signal TE and focus error signal FE and in accordance with a track jump command and an access command from a system controller 11 as well as detected rotating speed information from the spindle motor 2. The servo drive signals thus generated are used to control the two-axis mechanism 4 and sled mechanism 5 for focusing and tracking control and to keep the spindle motor 2 at a constant linear velocity (CLV).

The address decoder 10 decodes the supplied groove information GFM to extract address information therefrom. The address information is sent to the system controller 11 for control over various operations.

The reproduced RF signal is subjected to such decoding processes as EFM demodulation and CIRC by the EFM/ACIRC encoder/decoder 8. During the processing, address and sub-code data are extracted and fed to the system controller 11.

Audio data (sector data) having undergone such decoding processes as EFM demodulation and CIRC by the EFM/ACIRC encoder/decoder 8 are written temporarily to a buffer memory 13 under control of a memory controller 12. Retrieval of data from the disc 90 by the optical head 3 and transfer of reproduced data from the optical head 3 to the buffer memory 13 are carried Out at a rate of 1.41 Mbits/sec., usually in an intermittent fashion.

The data written to the buffer memory 13 are retrieved in a properly timed manner for transfer at a rate of 0.3 Mbits/sec. to an audio data compression/decompression encoder/decoder 14. The audio data compression/decompression encoder/decoder 14 subjects the received data in compressed format to decoding and other related reproduced-signal processes to generate a digital audio signal sampled at a frequency of 44.1 KHz and quantized in 16 bits.

The digital audio signal is converted to an analog audio signal by a D/A converter 15. The analog signal is sent to an output processing unit 16 for level and impedance adjustment before being output as an analog audio signal Aout through a line output terminal 17 to an external device. The analog audio signal is also fed to a headphone output terminal 27 as a headphone output HPout to headphones that may be connected.

The digital audio signal following decoding by the audio data compression/decompression encoder/decoder 14 is sent to a digital interface 22 for output as a digital audio signal Dout through a digital output terminal 21 to an external device. Illustratively, the signal may be output to an external device over an optical cable.

A record signal (an analog audio signal Ain) fed to a line input terminal 18 for writing to the magneto-optical disc 90 is first converted to a digital audio signal by an A/D converter 19. The digital audio signal is supplied to the audio data compression/decompression encoder/decoder 14 for audio data compression encoding.

If a digital audio signal Din is supplied through a digital input terminal 20 from an external device, the digital interface 22 extracts control codes from the supplied data. The audio data are forwarded to the audio data compression/decompression encoder/decoder 14 for audio data compression encoding.

Although not shown, a microphone input terminal may obviously be provided to accept microphone input as an input signal as well.

The data compressed by the audio data compression/decompression encoder/decoder 14 into recording data are written in a temporarily cumulative manner to the buffer memory 13 by the memory controller 12. The data are then retrieved from the buffer memory 13 in increments of a predetermined data size and sent to the EFM/ACIRC encoder/decoder 8 for encoding processes such as CIRC encoding and EFM. After the encoding operation by the EFM/ACIRC encoder/decoder 8, the data are fed to a magnetic head drive circuit 6.

The magnetic head drive circuit 6 supplies the magnetic head 6a with a magnetic head drive signal in accordance with the encoded recording data. Specifically, the magnetic head drive circuit 6 causes the magnetic head 6a to apply an N or S field to the magneto-optical disc 90. At this time, the system controller 11 provides the optical head 3 with a control signal to output a recording-level laser beam.

An operation unit 23 has controls made up of keys and dials to be operated by a user. The controls cover recording and reproducing operations such as playback, recording, temporary halt, stop, fast forward (FF), rewind (REW), and auto music search (AMS); playing mode-related operations such as normal playback, program playback and shuffle playback; display mode-related operations performed to switch display status of a display unit 24; and program editing operations such as track (program) segmentation, track concatenation, track erasure, track name input, and disc name input.

Operating information coming from these operation keys and dials are sent to the system controller 11 which carries out control operations accordingly.

This embodiment of the invention includes a receiving unit 30 that receives command signals transmitted by a remote controller 32 using illustratively infrared radiation. The receiving unit 30 decodes a received signal to output command code (operating information) to the system controller 11. The system controller 11 also performs its control operations based on the operating information coming from the receiving unit 30.

The display unit 24 is controlled in terms of display operation by the system controller 11. The system controller 11 transmits data to be displayed to a display driver inside the display unit 24 for data display. Given the data, the display driver drives accordingly the display unit 24 such as a liquid crystal display in display operation so that numerals, characters and symbols are displayed.

The display unit 24 indicates operation mode status of the disc currently loaded for recording or playback, as well as the track number, recording/playback time and editing status.

The disc 90 is capable of storing character information (track names for example) such as track names and album titles to be managed in connection with programs furnished as main data. Characters upon storage as character information are displayed on the display unit 24, and character information retrieved from the disc is also displayed.

With this embodiment, the disc 90 may record AUX data (AUX data) as a data file independent of music and other data constituting programs.

A data file as AUX data is made of information such as characters and still pictures. These characters and still pictures may be output and displayed by the display unit 24.

This embodiment of the invention has a JPEG decoder 26 designed to display still pictures and characters made of AUX data onto the display unit 24.

More specifically, still picture data making up a data file as AUX data are recorded in a compressed file format complying with the JPEG (Joint Photographic Coding Experts Group) standard. The JPEG decoder 26 admits through the memory controller 12 illustratively a still picture data file that has been retrieved from the disc 90 and written cumulatively to the buffer memory 13. The received file is decompressed as per the JPEG criteria before being output to the display unit 24. This causes the display unit 24 to display the still picture data made up of AUX data.

For output of character information or still picture information constituted as AUX data, it is often preferred to install a full-dot display or CRT display of a relatively large size offering an appreciably high degree of freedom for display on its screen. In that case, the AUX data may be output through another interface 25 and displayed on such an externally furnished monitor.

AUX data files may be recorded by the user on the disc 90. For such data file input, it may be necessary to use an image scanner, a personal computer and/or a keyboard. Information constituting the AUX data may then be input through the interface 25 from these externally added devices.

For this embodiment, an IEEE 1394 interface is assumed to be adopted as the interface 25. In the description that follows, the interface 25 and the IEEE 1394 interface will be referred to interchangeably. The IEEE 1394 interface 25 is connected to various external devices through the IEEE 1394 bus 116.

The system controller 11 is a microcomputer comprising an internal interface. The microcomputer performs the above-described diverse control operations.

A program ROM 28 stores programs for allowing this recording and reproducing apparatus to implement various operations. A work RAM 29 accommodates as needed data and programs for allowing the system controller 11 to carry out various processes.

To write or reproduce data to or from the disc 90 requires retrieving therefrom management information, i.e., P-TOC (pre-mastered TOC (table of contents)) and U-TOC (user TOC). Given such management information, the system controller 11 identifies addresses of those areas on the disc 90 to or from which to record or retrieve data.

The management information is retained in the buffer memory 13.

When the disc 90 is loaded, the system controller 11 retrieves its management information by reproducing data from the innermost region on the disc where the information in question is recorded. The retrieved information is placed into the buffer memory 13 which may be referenced subsequently to execute recording, playback or editing of programs on the disc 90.

The U-TOC is updated in keeping with program data recordings and various editing processes. Every time data are recorded or edited, the system controller 11 updates the U-TOC information in the buffer memory 13. The update operation is paralleled in a suitably timed manner by an update of the U-TOC area on the disc 90.

The disc 90 accommodates AUX data files apart from the programs. An AUX-TOC is formed on the disc 90 for managing these AUX data files.

Upon retrieval of the U-TOC, the system controller 11 also reads out the AUX-TOC and places it into the buffer memory 13. Managed status of the AUX data may later be referenced by looking up the AUX-TOC in the buffer memory 13.

The system controller 11 reads AUX data files as needed and in a suitably timed fashion (or simultaneously with retrieval of the AUX-TOC). The retrieved files are placed into the buffer memory 13. The AUX data files are then output in a properly timed manner according to the AUX-TOC and displayed in the form of characters and images on the display unit 24 or on an external device via the IEEE 1394 interface 25.

In the above setup, the IEEE 1394 interface 25 is capable of transmitting and receiving audio data. That means the MD recorder/player embodying this invention receives audio data transferred through the IEEE 1394 interface 25 and records the received data to the disc 90.

If the transferred audio data are illustratively digital audio data sampled at a frequency of 44.1 KHz and quantized in 16 bits, then the data are forwarded through the system controller 11 to the audio data compression/decompression encoder/decoder 14 for audio data compression.

If the transferred audio data turn out to be compressed audio data in compliance with the compression format of this MD recorder/player, then the data are sent through the system controller 11 to the memory controller 12.

### 1-3 Personal computer

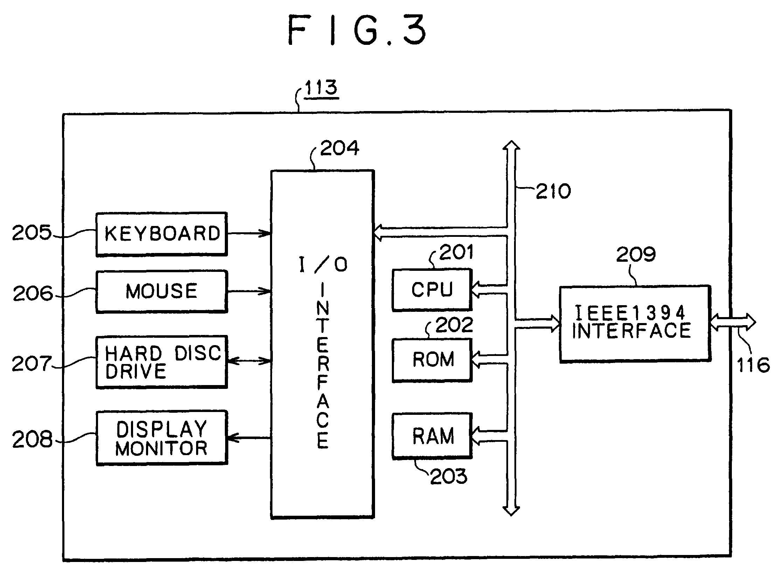

An internal structure of the personal computer 113 will now be described by referring to FIG. 3.

As illustrated, the personal computer 113 has an IEEE 1394 interface 209 for exchanging data with an external entity. The IEEE 1394 interface 209 is connected to the IEEE 1394 bus 116 serving as an external data bus for two-way communication with an external device.

The IEEE 1394 interface 209 demodulates packets received over the IEEE 1394 bus 116, extracts data from the received packets, converts the extracted data to a data format compatible with internal data communication, and outputs the converted data to a CPU 201 through an internal bus 210.

Furthermore, the IEEE 1394 interface 209 admits output data under control of the CPU 201, subjects the data to modulation processes based on an IEEE 1394 format such as conversion into packets, and transmits the modulated data to the outside over the IEEE 1394 bus 116.

The CPU 201 carries out a number of processes in accordance with programs retained illustratively in a ROM 202. This embodiment has in its ROM 202 programs for controlling the IEEE 1394 interface 209 to permit data exchanges in keeping with the IEEE 1394 standard. That is, the personal computer 113 has a set (hardware and software) for enabling data exchanges under IEEE 1394.

A RAM 203 accommodates as needed data and programs for allowing the CPU 201 to execute various processes.

An input/output interface 204 is connected to a keyboard 205 and a mouse 206. Operation-induced signals from these components are forwarded through the interface 204 to the CPU 201. The I/O interface 204 is also connected to a hard disc drive 207 containing hard discs as a storage medium. Through the I/O interrace 204, the CPU 201 may write and read data and programs to and from the hard discs in the hard disc drive 207. In this setup, the I/O interface 204 is further connected to a display monitor 208 for picture display.

The internal bus 210 is constituted illustratively by a PCI (Peripheral Component Interconnect) bus or by a local bue. As such, the internal bus 210 provides interconnections between the internal function circuits.

In the MD recorders/players 1 and 1A and described above, their IEEE 1394 interface adopts basically the same functional structure as that of the personal computer 113.

More specifically, the MD recorders/players 1 and 1A in FIG. 2 have in their program ROM 28 programs for allowing the system controller 11 to control the IEEE 1394 interface 25.

The system configuration of this embodiment wherein the components are interconnected by means of IEEE 1394 bus lines has been described only for illustrative purposes and is not limitative of the invention.

### 2. Data Communications of the Invention in Compliance with IEEE 1394

### 2-1 Overview

Below is a description of how data communications of the invention take place in accordance with IEEE 1394.

IEEE 1394 constitutes one of serial data communication standards. Under IEEE 1394, there are two data transmission method: isochronous communication method for periodical communications, and asynchronous communication method for asynchronous communications free of periodicity. Generally, the isochronous communication method is used for data transmission and reception while the asynchronous communication method is adopted for exchanging various control commands. A single cable allows data and commands to be transmitted and received by the two communication methods.

As described, an AV system according to the invention permits exchanging of audio data including compressed audio data as user data and AUX (picture files (JPEG still picture data) and text files) compatible with an MD recorder/player, between configured devices over an IEEE 1394 bus arrangement. The AV system also allows a device acting as a controller to exercise remote control over a device selected as a target.

Audio data are time-series data that call for audio output based on playback time, which requires real time processing. In addition, audio data are far greater in quantity than AUX data. The AUX data are modest in quantity compared with audio data and) unlike ATRAC data, are not strictly subject to real-time constraints although the data are sometimes reproduced in synchronism with audio data playback.

Overall, the IEEE 1394 interface of this embodiment requires that audio data be transmitted and received by the isochronous communication method over an IEEE 1394 bus and that AUX data be exchanged by the asynchronous communication method over the same bus. With this embodiment, it is possible for the IEEE 1394 interface either to send audio data and AUX data separately, or to transmit both audio and AUX data using isochronous cycles on a time division basis, i.e., in an apparently simultaneous manner as will be described later.

What follows is a description of the embodiment carrying out communications in compliance with the IEEE 1394 criteria.

### 2-2 Stack Model

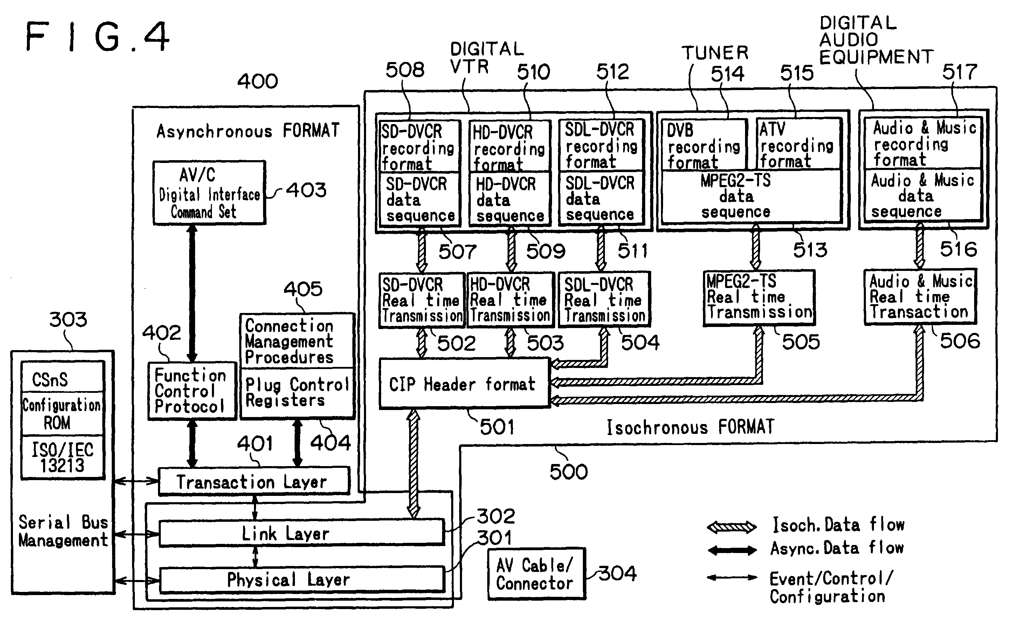

FIG. 4 shows a stack model of the IEEE 1394 as implemented in this embodiment. The IEEE 1394 format comes in two types: asynchronous format (400) and isochronous format (500). Common to both the asynchronous format (400) and the isochronous format (500) is the lowest layer called a physical layer (301) above which is a link layer (302). The physical layer (301) takes care of signal transmission on a hardware basis. The link layer (302) has functions for converting an IEEE 1394 bus illustratively to an internal bus specific to a given device.

The physical layer (301), the link layer (302), and a transaction layer (401) to be described below, are linked to serial bus management 303 by event/control/configuration lines. An AV cable/connector 304 represents physical connectors and cables needed for AV data transmission.

For the asynchronous format (400), the transaction layer (401) comes on top of the link layer (302). The transaction layer (401) defines data transmission protocols of IEEE 1394. As basic asynchronous transactions, the transaction layer (401) designates a write transaction, a read transaction and a lock transaction.

The transaction layer (401) is topped by an FCP (Function Control Protocol)(402). The FCP (402) executes command control over various AV devices by use of control commands defined as AV/C commands (AV/C Digital Interface Command Set)(403).

Above the transaction layer (401) are plug control registers (404) for establishing plugs (logical device connections under IEEE 1394, to be described later) using connection management procedures (405).

In the isochronous format (500), a CIP header format (501) comes above the link layer (302). Under management of the CIP header format (501), there are stipulated such transmission protocols as SD-DVCR Real time Transmission (502), HD-DVCR Real time Transmission (503), SDL-DVCR Real time Transmission (504), MPEG2-TS Real time Transmission (505), and Audio and Music Real time Transmission (506).

The SD-DVCR Real time Transmission (502), HD-DVCR Real time Transmission (503), and SDL-DVCR Real time Transmission (504) are data transmission protocols that address digital VTRs (Video Tape Recorders).

Data to be handled by the SD-DVCR Real time Transmission (502) are a data sequence (SD-DVCR data sequence (507)) acquired in accordance with an SD-DVCR recording format (508).

Data to be handled by the HD-DVCR Real time Transmission (503) are a data sequence (SD-DVCR data sequence (509)) obtained in keeping with an HD-DVCR recording format (510).

Data to be handled by the SDL-DVCR Real time Transmission (504) are a data sequence (SD-DVCR data sequence (511)) gained as per an SDL-DVCR recording format (512).

The MPEG2-TS Real time Transmission (505) is a transmission protocol that addresses illustratively tuners for digital broadcasts via satellite. Data to be handled by this protocol are a data sequence (MPEG2-TS data sequence (513)) acquired in compliance with a DVB (Digital Video Broadcast) recording format (514) or an ATV (Analog Television) recording format (515).

The Audio and Music Real time Transmission (506) is a transmission protocol that addresses a whole range of digital audio equipment including the MD system embodying this invention. Data to be dealt with by this protocol are a data sequence (Audio and Music data sequence) obtained in accordance with an audio and music recording format (517).

### 2-3 Forms of Signal Transmission

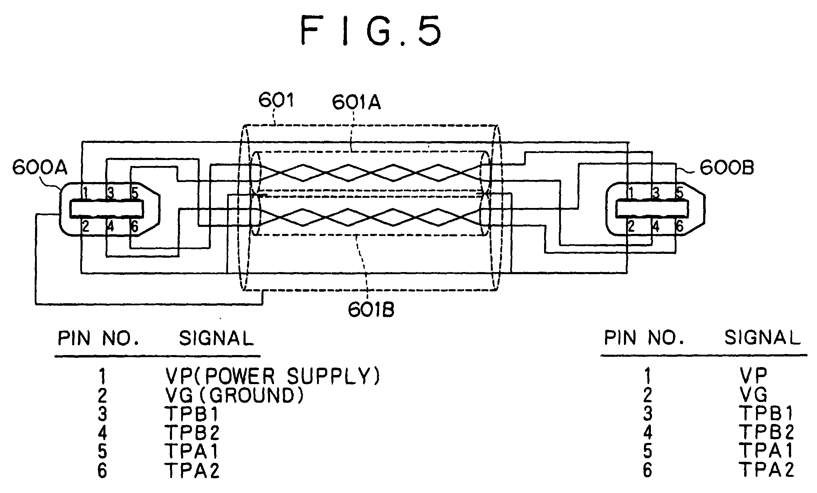

FIG. 5 depicts a typical structure of a cable actually used as an IEEE 1394 bus.

In FIG. 5, connectors 600A and 600B are connected via a cable 601. Pins numbered 1 through 6 are shown to be used as pin terminals attached to the connectors 600A and 600B.

Of the pin terminals on the connectors 600A and 600B, pin No. 1 corresponds to power supply (VP), pin No. 2 to ground (VG), pin No. 3 to TPB1, pin No. 4 to TPB2, pin No. 5 to TPA1, and pin No. 5 to TPA2.

The pins are interconnected between the connectors 600A and 600B as follows:
pin No. 1 (VP) to pin No. 1 (VP);
pin No. 2 (VG) to pin No. 2 (VG);
pin No. 3 (TPB1) to pin No. 5 (TPA1);
pin No. 4 (TPB2) to pin No. 6 (TPA2);
pin No. 5 (TPA1) to pin No. 3 (TPB1); and
pin No. 6 (TPA2) to pin No. 4 (TPB2).
Of the above pin connection pairs, two twist pairs
pin No. 3 (TPB1) to pin No. 5 (TPA1) and
pin No. 4 (TPB2) to pin No. 6 (TPA2)
constitute a signal line 601A for alternately transmitting signals on a differential basis. Furthermore, another two twist pairs
pin No. 5 (TPA1) to pin No. 3 (TPB1) and
pin No. 6 (TPA2) to pin No. 4 (TPB2)
form a signal line 601B for alternately transmitting signals also on a differential basis.

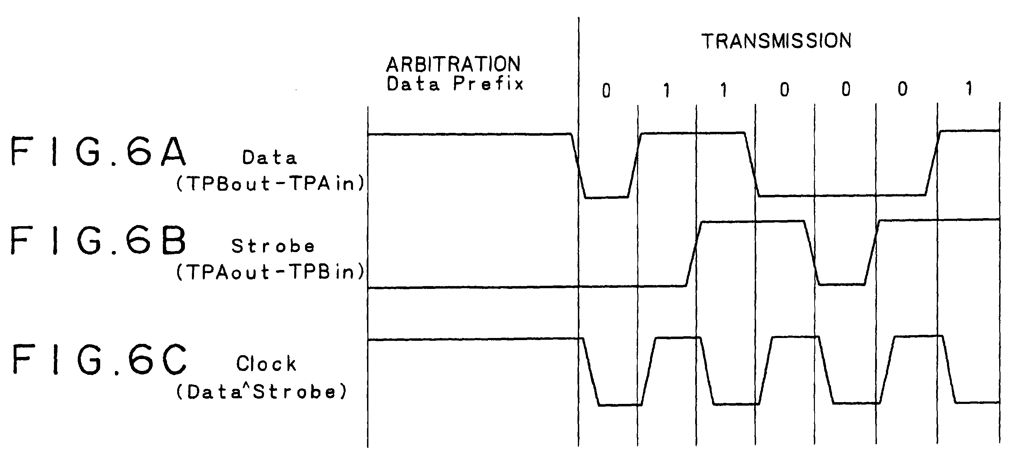

The signals sent over the two sets of signal lines 601A and 601B are a data signal (Data) shown in FIG. 6A and a strobe signal (Strobe) in FIG. 6B.

The data signal in FIG. 6A uses one of the signal lines 601A and 601B. This data signal is output through TPB1 and TPB2 and enters TPA1 and TPA2.

The strobe signal in FIG. 6B is obtained by performing a predetermined logic operation on the data signal and on a transmission clock synchronized with this data signal. For that reason, the strobe signal has a frequency lover than that of the actual transmission clock. The strobe signal uses either of the signal lines 601A and 601B that is not occupied for data signal transmission. Following propagation over the signal line, the strobe signal is output through TPA1 and TPA2 to enter TPB1 and TPB2.

Suppose that the data signal of FIG. 6A and strobe signal of FIG. 6B are input to a device complying with IEEE 1394. In that case, the device carries out the appropriate logic operation on the input data signal and strobe signal to generate a transmission clock (Clock) shown in FIG. 6C. The transmission clock thus generated is used for necessary input data signal processing.

By adopting such hardware-based data transmission forms, the IEEE 1394 format eliminates the need for transferring a rapid-cycle transmission clock over cables between configured devices. This enhances the reliability of signal transmission.

Although the six-pin arrangement has been described above, this is not limitative of the invention. Alternatively, the IEEE 1394 format may omit the power supply (VP) and ground (VG) to form a four-pin arrangement consisting of two twist pairs, i.e., signal lines 601A and 601B only. The MD recorder/player 1 of the embodiment may illustratively utilize such a four-pin cable arrangement to provide users with a more simplified system than ever.

### 2-4 Device-to-device bus connection

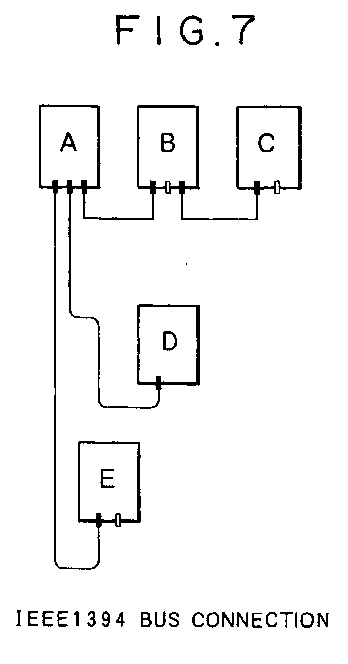

FIG. 7 illustrates schematically how devices are typically interconnected by use of IEEE 1394 buses. The setup of FIG. 7 shows five devices A through E (nodes) being connected for intercommunication via the IEEE 1394 buses (i.e. cables).

The IEEE 1394 interface is capable of what is known as daisy-chain connection whereby apparatuses such as the devices A, B and C in FIG. 7 are serially connected through the IEEE 1394 buses. The interface also permits so-called branch connection whereby an apparatus is connected in parallel with multiple apparatuses, as in the setup of FIG. 7 in which the device A is connected in parallel with the devices B, D and E.

The system as a whole is allowed to have up to 63 devices (nodes) configured through both branch connection and daisy-chain connection. Used alone, the daisy-chain connection permits a configuration of up to 16 devices (16 pop). Terminators needed for the SCSI (Small Computer System Interface) are not necessary for the IEEE 1394 interface.

The IEEE 1394 interface allows the devices connected by such daisy-chain connection or branch connection to communicate with one another. In the setup of FIG. 7, the devices A, B, C, D and E are allowed to communicate with one another.

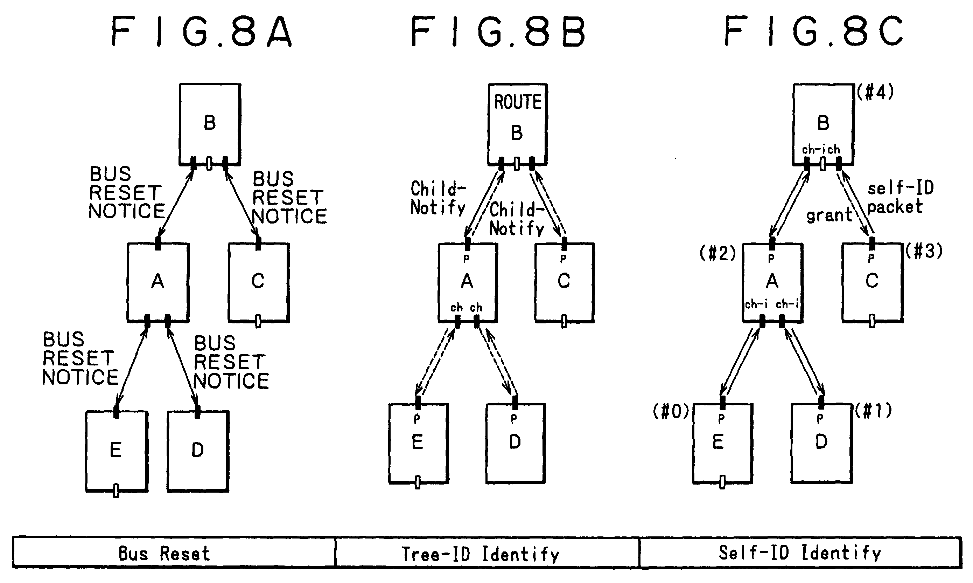

Within the system where a plurality of devices are connected by IEEE 1394 buses (the system is also called the IEEE 1394 system hereinafter), each of the configured devices is assigned a node-ID in practice. The process of node-ID assignment is shown schematically in FIGS. 8A to 8C.

In an IEEE 1394 system whose connection setup is shown in FIG. 8A, a bus reset is generated if a cable is connected or disconnected, if any one of the configured devices of the system is turned on or off, or if a spontaneous process takes place under PHY (Physical Layer Protocol). In such a case, a bus reset notice is sent to all devices A, B, C, D and E over the IEEE 1394 buses.

The bus reset notice triggers communications (called Child-Notify) that result in defining parent-child relations between adjacent devices as depicted in FIG. 8B. That is, a tree structure of the configured devices is built within the IEEE 1394 system. With the tree structure established, the device constituting a root of the tree is defined. The root is a device whose terminals are all defined as "children" (Ch). In the setup of FIG. 8B, the device B is defined as the root. In other words, a terminal of the device connected to the device B as the root is defined as a "parent" (P).

When the tree structure and its root have been defined in the IEEE 1394 system as described above, each device then outputs a self-ID packet as a declaration of its own node-ID as shown in FIG. 8C. The root grants one node-ID after another to the connected devices, whereby addresses (node-IDs) of the devices constituting the IEEE 1394 system are determined.

### 2-5 Packet

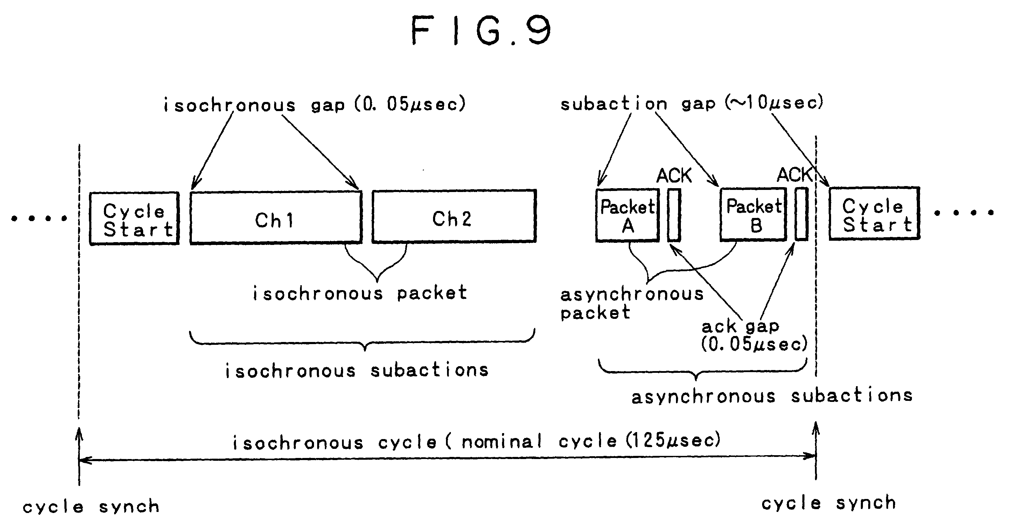

As shown in FIG. 9, the IEEE 1394 format effects data transmission through repeated isochronous cycles (nominal cycles). It is stipulated that each isochronous cycle lasts 125 µsec on a frequency band of 100 MHz. It is also stipulated that the isochronous cycle may have a duration period other than 125 µsec. For transmission. data are turned into packets in each isochronous cycle.

As illustrated in FIG. 9, each isochronous cycle is headed by a cycle start packet indicating the beginning of the cycle.

When to generate cycle start packets is designated by a device defined as a cycle master in the IEEE 1394 system. Details of the cycle start packet generation will not be described further.

Each cycle start packet is followed preferentially by isochronous packets. As shown in FIG. 9, the isochronous packets correspond to a channel each and are transferred on a time division basis (in the form of isochronous subactions). In isochronous subactions, the packets are set apart by intervals called isochronous gaps (each lasting illustratively 0.05 µsec).

As described, the IEEE 1394 system allows isochronous data to be transmitted and received over a single transmission line on a multi-channel basis.

Suppose that compressed audio data (called ATRAC data hereinafter) compatible with the MD recorder/player of this embodiment are transmitted by the isochronous method. In that case, if ATRAC data are subject to a single-speed transfer rate of 1.4 Mbps, then time series continuity (i.e., real-time characteristic) is guaranteed by transmitting the data in isochronous packets of 20-odd megabytes per 125-µsec isochronous cycle.

For example, before transmitting ATRAC data, a device requests an IRM (Isochronous Resource Manager) in the IEEE 1394 system to grant an isochronous packet size large enough to ensure real-time transmission of the ATRAC data. In response, the IRM grants or withholds permission for the packet size by monitoring the current data transmission status. It permission is granted, the ATRAC data in question are transmitted in isochronous packets over specific channels. This procedure, of which details will not be described further, is called band reservation for the IEEE 1394 interface.

Frequency ranges not used for isochronous subactions over the isochronous cycle band are utilized for asynchronous subactions, i.e., for asynchronous transmission of packets.

FIG. 9 shows an example in which two asynchronous packets A and B are transmitted. The asynchronous packets are each followed by an ACK (acknowledge) signal, with an interval called an ACK gap (0.05 µsec long) interposed therebetween. An ACK signal is output by the receiving side (i.e., target) on a hardware basis informing the transmitting side (i.e., controller) that some asynchronous data have been received during an asynchronous transaction, as will be described later.

An interval called a subaction gap about 10 µsec is placed before and after each data transmission unit made of an asynchronous packet and an ACK signal.

Where arrangements are made to transmit ATRAC data in isochronous packets and to send AUX data files accompanying the ATRAC data in asynchronous packets, it is possible to transmit both the ATRAC data and the AUX data files in an apparently simultaneous fashion.

### 2-6 Transaction Rules

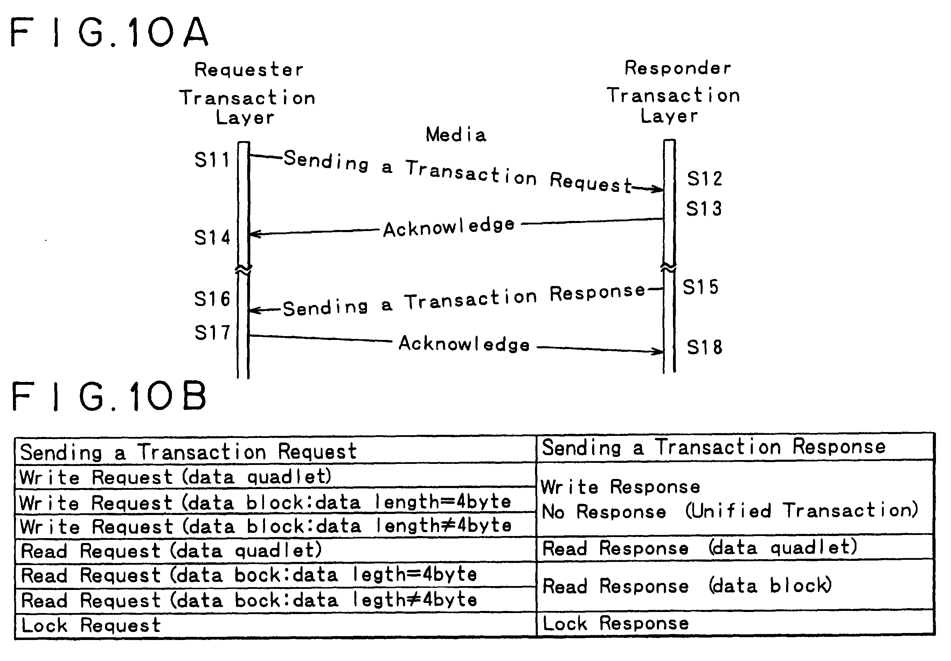

FIG. 10A is a process transition diagram showing basic transaction rules for asynchronous communication. The transaction rules are stipulated in compliance with the FCP.

As depicted in FIG. 10A, a requester (transmitting side) first sends a request to a responder (receiving side) in step S11. On receiving the request (in step S12), the responder sends an acknowledgment back to the requester (in step S13). When receiving the acknowledgment, the requester confirms that the request has been accepted by the responder (in step S14).

In turn, the responder sends a transaction response to the request from the requester (in step S15). Upon receipt of the response (in step S16), the requester returns an acknowledgment to the responder (in step S17). When receiving the acknowledgment, the responder verifies that its response has been received by the requester.

Request transactions transmitted in FIG. 10A fall into three categories: write requests, read requests, and lock requests, as listed in the left-hand part of the table in FIG. 10B.

Write requests are commands that designate data write operations. Read requests are commands that specify data read operations. Lock requests, though not discussed hereinafter in detail, are commands for swap, compare, and mask operations.

The write requests are further grouped by the data size of the command (operand) in an asynchronous packet (AV/C command packet, to be described later with reference to figures) into three types. One write request type is a write request (data quadlet) for sending a command according to the header size alone in an asynchronous packet. The other two write request types are a write request (data block: data length = 4 bytes) and a write request (data block; data length ≠ 4 bytes). Each of the latter two write request types supplements a header of an asynchronous packet with a data block for command transmission. What makes the two write request types different from each other is that the data size of the operand placed in the data block is four bytes for one request type and something other than four bytes for the other.

As with the write requests, the read requests are further grouped by the data size of the operand in an asynchronous packet into three types: a read request (data quadlet), a read request (data block: data length = 4 bytes), and a read request (data block: data length ≠ 4 bytes).

Response transactions are listed in the right-hand part of the table in FIG. 10B.

Either a write response or no response is defined as corresponding to any of the three write request types.

A read response (data quadlet) is defined as corresponding to the read request (data quadlet), and a read response (data block) as corresponding to the read request (data block: data length = 4 bytes) or to the read request (data block: data length ≠ 4 bytes).

A lock response is defined as corresponding to the lock request.

### 2-7 Addressing

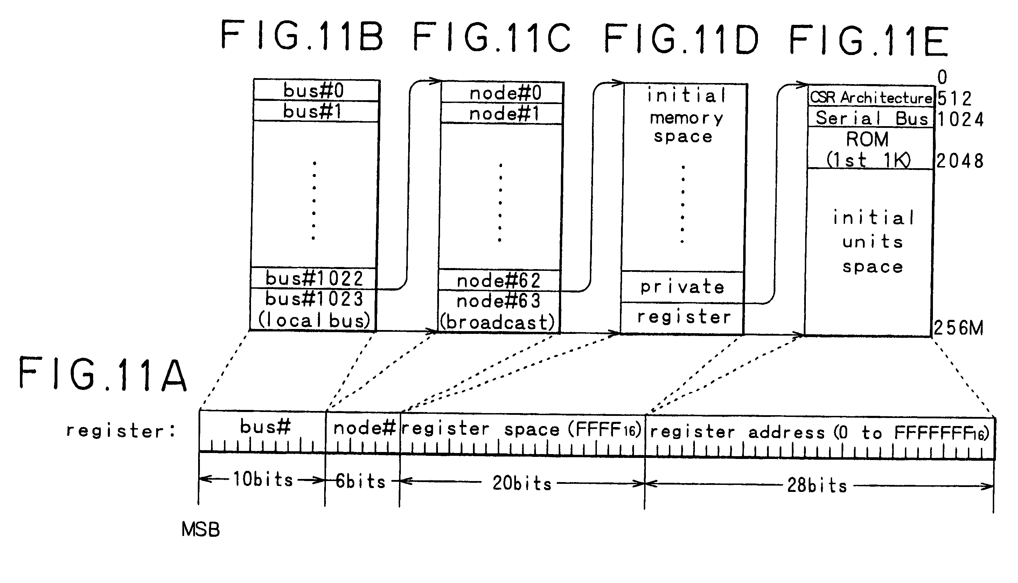

FIGS. 11A to 11E show addressing structures of IEEE 1394 buses.

As depicted in FIG. 11A, a 64-bit bus address register (address space) is provided in the IEEE 1394 format.

A high-order 10-bit region of the register designates a bus ID for identifying an IEEE 1394 bus. As shown in FIG. 11B, the region permits setting of up to 1,023 bus IDs for buses #0 through #1,022. Bus #1,023 is defined as a local bus.

A six-bit region following the bus address in FIG. 11A designates a Node ID of a device connected to the IEEE 1394 bus identified by the bus ID. As depicted in FIG. 11C, the Node ID permits identification by up to 63 Node IDs numbered 0 through 62.

The 16-bit region comprising the bus ID and Node ID above corresponds to a destination ID in a header of an AV/C command packet, to be described later. In the IEEE 1394 system, each device connected to a specific bus is identified by the bus ID and Node ID.

A 20-bit region following the Node ID in FIG. 11A constitutes a register space. The register space is followed by a 28-bit register address.

The register space has a value [F FF FFh] indicating the register shown in FIG. 11D. The content of this register is defined as depicted in FIG. 11E. The register address designates the address of the register shown in FIG. 11E.

In brief, addressing works as follows: information about an isochronous cycle time and free channels is obtained by referring to serial bus-dependent registers starting illustratively from address 512 [0 00 02 00h] in the register of FIG. 11E.

A reference to the content of a configuration ROM starting from address 1,024 [0 00 04 00h] permits recognition of a node type and a node-unique ID specific to that node type.

### 2-8 CIP

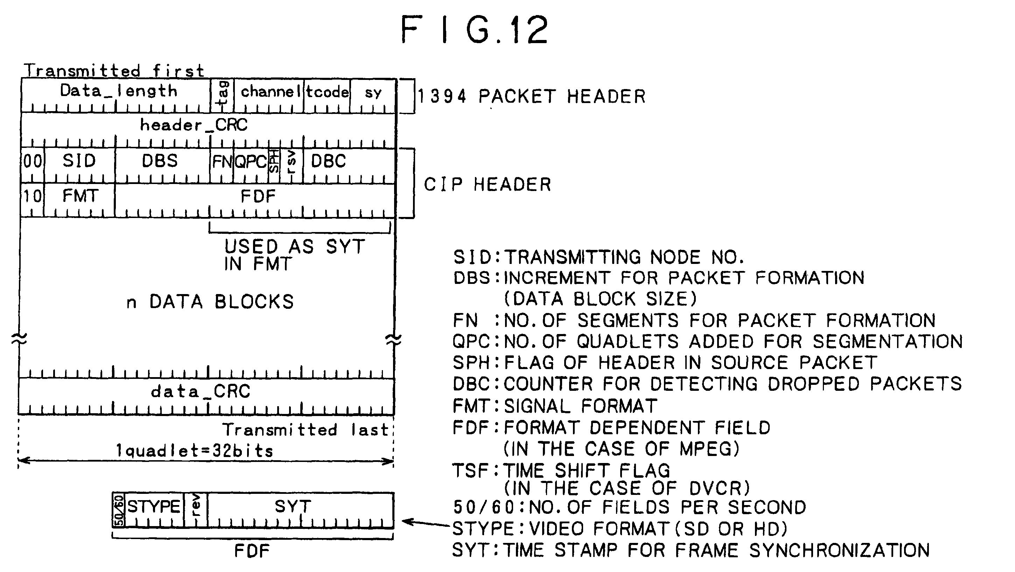

FIG. 12 illustrates a structure of a CIP (Common Isochronous Packet). This is a data structure of the isochronous packet shown in FIG. 9. In IEEE 1394-compatible communications, as mentioned above, ATRAC data (audio data), one type of audio data to be recorded and reproduced by the MD recorder/player of this embodiment, are transmitted and received by the isochronous method. That is, quantities of data sufficient to maintain the real-time characteristic are carried by isochronous packets that are transmitted one after another in isochronous cycles.

The first 32 bits (one quadlet) of the CIP constitute a 1394 packet header.

In this packet header, a high-order 16-bit region indicates a data_Length followed by a two-bit region that designates a tag. The tag is followed by a six-bit region designating a channel. The channel region is followed by a four-bit designating tcode which in turn is followed by a four-bit sy code. A quadlet region following the 1394 packet header contains a header_CRC.

A two-quadlet region following the header_CRC constitutes a CIP header. In the high-order quadlet of the CIP header, the most significant two bits are each filled with a "0". A six-bit region after the "00" bits indicates an SID (Send ID number), followed by an eight-bit region designating a DBS (Data Block Size, i.e., increment of data for packet formation). The DBS region is followed by an FN (of two bits) and a QPC (of three bits) region. The FN region denotes the number of segments for packet formation, and the QPC region represents the number of quadlets added for segmentation.

The QPC region is followed by an SPH (of one bit) region that indicates a flag of the header in a source packet. A DBC region contains a value of a counter for detecting dropped packets.

High-order two bits in the low-order quadlet of the CIP header are each filled with a "0". The "00" bits are followed by an FMT (of six bits) and an FDF (of 24 bits) region. The FMT region denotes a signal format (a transmission format) whose value permits identification of a type of data (data format) placed in this CIP. More specifically, such data types as MPEG stream data, AUDIO stream data, and digital video camera (DV) stream data may be identified by the FMT region. The data format given in the FMT region corresponds illustratively to a transmission protocol such as the SD-DVCR Real time Transmission (502), HD-DVCR Real time Transmission (503), SDL-DVCR Real time Transmission (504), MPEG2-TS Real time Transmission (505), or Audio and Music Real time Transmission (506) under management of the CIP header format (501) shown in FIG. 4.

The FDF region is a format-dependent field designating a more detailed category of the data format classified by the FMT region. Illustratively, audio data may be identified in more detail as linear audio data or MIDI data.

For example, ATRAC data for use with this embodiment are first indicated as data falling under the category of audio stream data in the FMT region. With a predetermined value set to the FDF region, the audio stream data are further shown to be ATRAC data.

If the FMT region indicates MPEG data, then the FDF region holds synchronization control information called a TSF (Time Shift Flag). If the FMT region denotes DVCR (digital video camera) data, the FDF region is defined as shown in the lower part of FIG. 12. This FDF region has a high-order 50/60 region (of one bit) designating the number of fields per seconds, followed by an STYPE region (of five bits) indicating whether the video format is SD or HD. The STYPE region is followed by an SYT region that provides a time stamp for frame synchronization.

Following the CIP header, the data indicated by the FMT and FDF regions are stored in a sequence of "n" data blocks. If the data are shown to be ATRAC data by the FMT and FDF regions, the data blocks contain the ATRAC data.

The data blocks are terminated by a data_CRC region.

### 2-9 Connection Management

In the IEEE 1394 format, logical connections called "plugs" are used to define connective relations between devices connected by IEEE 1394 buses.

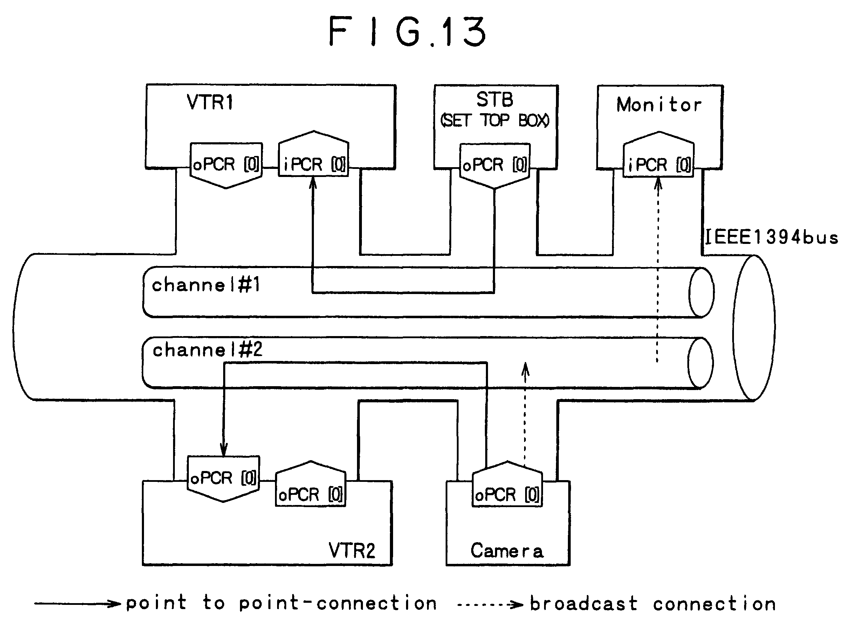

FIG. 13 shows a typical setup of connective relations defined by plugs. The setup constitutes a system having VTR1, VTR2, a set-top box (STB; digital satellite broadcast tuner), a monitor, and a digital still camera all connected via an IEEE 1394 bus.

There are two forms of plug-based IEEE 1394 connections: point-to-point connection, and broadcast connection.

The point-to-point connection specifies relations between a transmitting device and a receiving device. Data transmission takes place over a specific channel from the transmitting device to the receiving device.

On the other hand, the broadcast connection permits data transmission without requiring the transmitting device to specify receiving devices and channels to be utilized. The receiving devices receive the transmitted data without identifying the transmitting device and perform predetermined processes if so required by the content of the received data.

The setup of FIG. 13 shows two point-to-point connection states: one in which the STB send data and the VTR1 receives the data over channel #1, and the other in which the digital still camera sends data and the VTR2 receives the data over channel #2.

Also shown in FIG. 13 is a broadcast connection state for the digital still camera to transmit its data on a broadcasting basis. The broadcast data are shown being received by the monitor which in turn performs a predetermined response process.

The above connections (plugs) are established by a PCR (Plug Control Register) included in an address space of each device configured.

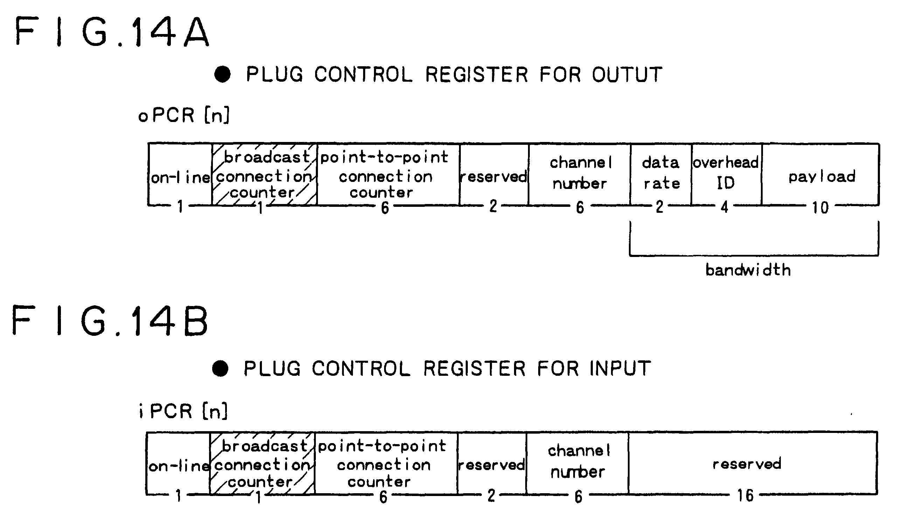

FIG. 14A depicts a structure of a plug control register for output (oPCR[n]), and FIG. 14B indicates a structure of a plug control register for input (iPCR[n]). The registers oPCR[n] and iPCR[n] have a size of 32 bits each.

In the register oPCR of FIG. 14A, illustratively a "1" set to the most significant bit (on-line) indicates data transmission by broadcast connection; a "0" shows that data are transmitted by point-to-point connection over a channel whose channel number is set in a six-bit channel number region starting from the 11th bit relative to the MSB.

In the register iPCR of FIG. 14B, illustratively a "1" set to the most significant bit (on-line) indicates data reception by broadcast connection; a "0" shows that data are received by point-to-point connection over a channel whose channel number is set in a six-bit channel number region starting from the 11th bit relative to the MSB.

### 2-10 Commands and Responses under FCP

In the IEEE 1394 format for this embodiment, AUX data (picture files and text files based on JPEG and recorded and reproduced by the MD recorder/player) are transmitted and received by the asynchronous communication method.

With this embodiment, transmission of AUX data by the asynchronous communication method is regulated under the FCP (402) shown in FIG. 4. Below is a description of a transaction for the transmission governed by the FCP.

A write transaction (see FIGS. 10A and 10B) prescribed for the asynchronous communication method is used under the FCP. AUX data are transmitted by this embodiment by utilizing write transactions for asynchronous communication in keeping with the FCP.

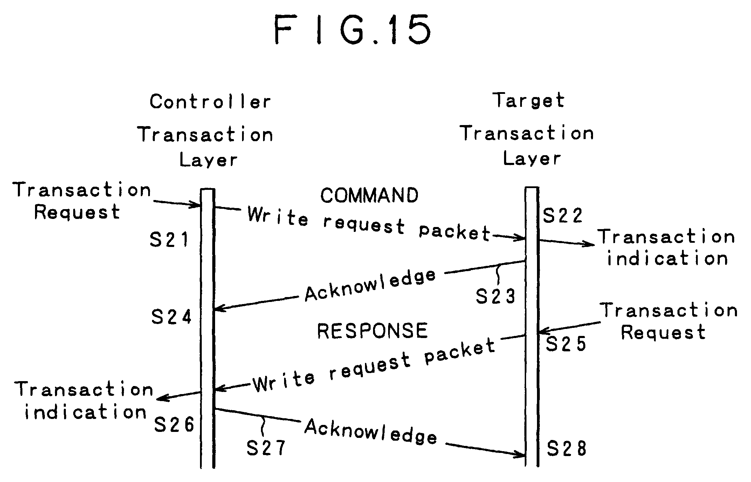

Each of the devices that support the FCP comprises a command/response register. A write transaction is implemented by writing a message to the command/response register as will be explained below with reference to FIG. 15.

FIG. 15 shows a process transition diagram wherein in step S21 a controller generates a transaction request and sends a write request packet to a target for a command transmission. In step S22, the target receives the write request packet and writes data to the command/response register. The target returns an acknowledgement to the controller and the controller receives the acknowledgement (S23 to S24). The steps so far constitute a command transmission process.

In a process responding to the command, the target transmits a write request packet (in step S25). On receiving the write request packet, the controller writes data to the command/response register (in step S26). With the write request packet received, the controller also transmits an acknowledgement to the target (in step S27). Receiving the acknowledgement allows the target to confirm that the write request packet has been received by the controller (in step S28).

That is, data transmission (transactions) according to the FCP is based on two processes: the process of command transmission from the controller to the target, and the process of response transmission from the target to the controller.

### 2-11 AV/C Command Packet

As described earlier in reference to FIG. 4, the FCP allows various AV devices to communicate by the asynchronous method using AV/C commands.

Three kinds of transactions, i.e., write, read and lock, are prescribed for asynchronous communication, as explained with reference to FIGS. 10A and 10B. In practice, a write request/response packet, a read request/response packet, and a lock request/response packet are used in keeping with the different transactions. For the FCP, the write transaction is employed as described above.

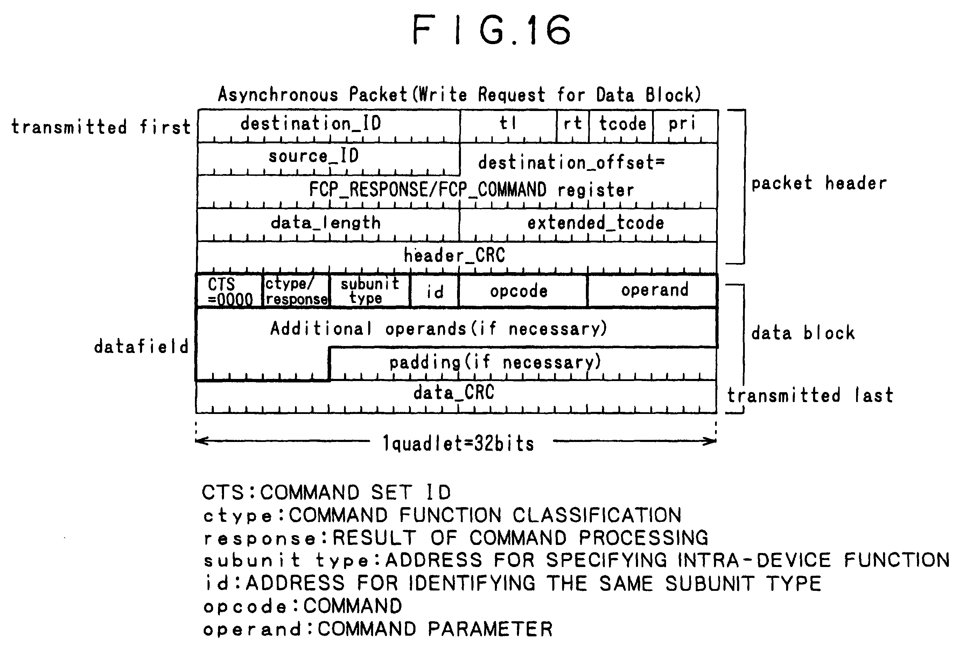

FIG. 16 shows a format of a write request packet (asynchronous packet (Write Request for Data Block)). This embodiment uses the write request packet as its AV/C command packet.

High-order five quadlets (i.e., the first through the fifth quadlets) in the write request packet constitute a packet header. A high-order 16-bit region in the first quadlet of the packet header denotes a destination_ID, i.e., an ID of a node serving as a data transfer destination. The destination ID region is followed by a six-bit "tl" (transact label) region representing a packet number. The six-bit region is followed by a two-bit "rt" (retry code) region indicating whether the packet in question is the initially transmitted packet or a retransmitted packet. The "rt" region is followed by a four-bit "tcode" (transaction code) region designating a command code. The "tcode" region is followed by a four-bit "pri" (priority) region indicating the priority of the packet.

A high-order 16-bit region in the second quadlet of the packet header denotes a source_ID, i.e., an ID of a node serving as a data transfer source.

A low-order 16-bit region in the second quadlet and the entire third quadlet, occupying a total of 48 bits, designate a destination_offset indicating two addresses: one for a command register (FCP_COMMAND register), and the other for a response register (FCP_RESPONSE register).

The destination_ID and destination_offset correspond to the 64-bit address space stipulated in the IEEE 1394 format.

A high-order 16-bit region in the fourth quadlet contains a data_length. This region designates the data size of a datafield, to be described later (shown enclosed by thick lines in FIG. 16). The data_length region is followed by an extended_tcode region used when the tcode is extended.

A 32-bit region making up the fifth quadlet indicates a header_CRC. This region contains a CRC-computed value to checksum the packet header.

Data blocks are arranged starting from the sixth quadlet following the packet header. A datafield is formed at the beginning of data blocks.

High-order four bytes forming the datafield heading the sixth quadlet describes a CTS (command and transaction set). The CTS region indicates an ID of a command set for the write request packet in question. For example, a CTS value of "0000" as shown in the figure defines the content of the datafield as an AV/C command. In other words, the write reguest packet is identified as an AV/C command packet. Thus with this embodiment, the CTS region is filled with "0000" to let the FCP use AV/C commands.

A four-bit region following the CTS has a response written therein indicating the result (i.e., response) of a process corresponding to a "ctype" (command type, i.e., a command function classification) or to a command.

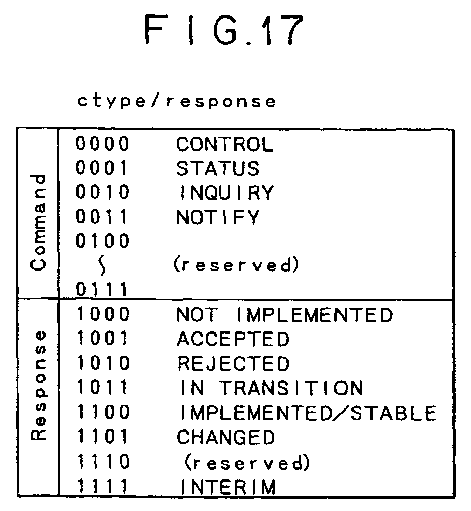

FIG. 17 lists definitions of the command types (ctype) and responses mentioned above. Values [0000] through [0111] are defined for use as "ctype" (commands). Specifically, the value [0000] is defined as CONTROL, [0001] as STATUS, [0010] as INQUIRY, and [0011] as NOTIFY. Values [0100] through [0111] are currently undefined (reserved).

CONTROL is a command used to control functions externally; STATUS is a command for inquiring status from the outside; INQUIRY is a command utilized to inquire externally the presence or absence of support for control commands; and NOTIFY is a command employed to request that an external entity be notified of status change.

Values [1000] through [1111] are defined for use as responses. Specifically, the value [1000] is defined as NOT IMPLEMENTED; [1001] as ACCEPTED; [1010] as REJECTED; [1011] as IN TRANSITION: [1100] as IMPLEMENTED/STABLE; [1101] as CHANGED; [1110] as reserved; and [1111] as INTERIM.

The responses above are used selectively depending on the command type. For example, one of four responses NOT IMPLEMENTED, ACCEPTED, REJECTED and INTERIM is employed selectively depending on the status of the responder.

In FIG. 16, the ctype/response region is followed by a five-bit region that contains a subunit-type. The subunit-type designates a subunit (device) that serves as a destination of command transmission or as a source of response transmission. In the IEEE 1394 format, each device is called a unit and a functional unit within the unit is called a subunit. Illustratively, a typical VTR as a unit comprises two subunits: a tuner for receiving terrestrial and satellite broadcasts, and a video cassette recorder/player.

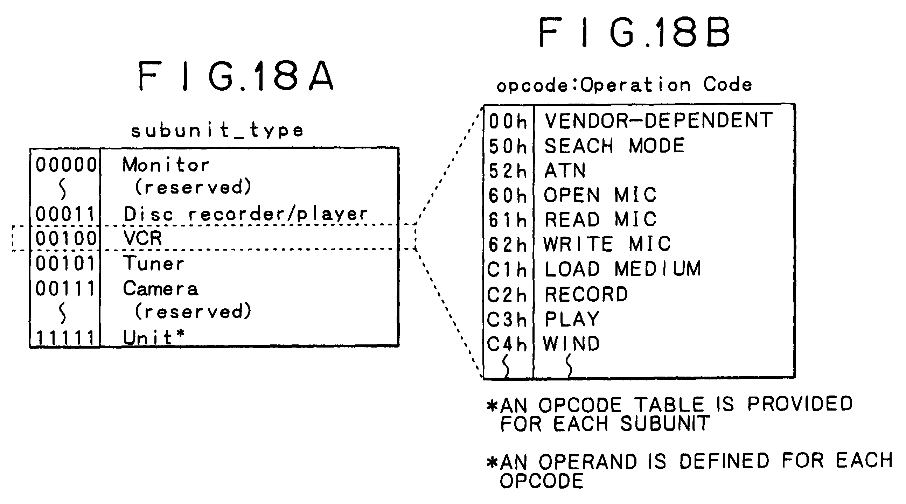

Subunit-types are defined illustratively as shown in FIG. 18A. Specifically_{,} a value [00000] is defined as a monitor while [00001] through [00010] are reserved. A value [00011] is defined as a disc recorder/player, [00100] as a VCR, [00101] as a tuner, [00111] as a camera, and [01000] through [11110] are reserved. A value [11111] is defined as a unit for use where no subunit exists.

In FIG. 16, a three-bit region following the subunit type region contains an "id" (Node_ID) for identifying a subunit if there exist a plurality of subunits of the same type.

An eight-bit region following the "id" (Node_ID) region contains an opcode which in turn is followed by an operand.

The opcode stands for an operation code. The operand containe information (parameter) needed by the opcode. Opcodes are defined for each subunit in an opcode list table specific to the subunit in question. Illustratively, if the subunit is a VCR, diverse commands such as PLAY (playback) and RECORD (recording) are defined for the subunit. An operand is defined for each opcode.

A 32-bit region constituting the sixth quadlet in FIG. 16 is a mandatory datafield. If necessary, operands may be added after this datafield (shown as additional operands).

The datafield is followed by a data_CRC region. Padding may be placed before the data_CRC region where necessary.

### 2-12 Plugs

Described below is general information about plugs in the IEEE 1394 format. As described above with reference to FIGS. 14A and 14B, plugs represent logical connections between devices in keeping with the IEEE 1394 format.

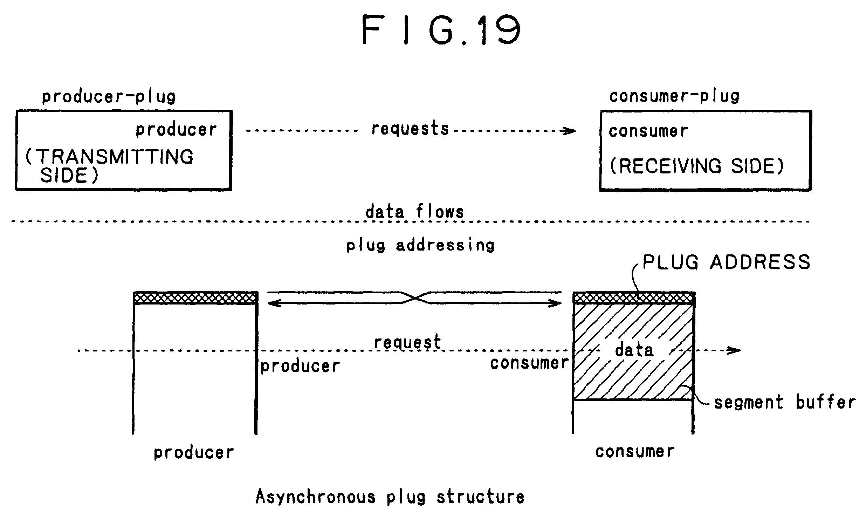

Data such as commands (requests) effective in asynchronous communication are sent from a producer to a consumer, as illustrated in FIG. 19. The producer stands for a device acting as a transmitter and the consumer denotes a device serving as a receiver in accordance with the IEEE 1394 interface. The consumer has a segment buffer, shown shaded in FIG. 19, which accommodates data written by the producer.

In the IEEE 1394 system, information for designating specific devices as the producer and consumer (the information is called Connection Management Information) is retained at predetermined plug address locations indicated by braided lines in FIG. 19. The segment buffer is located following the plug address.

The range of segment buffer addresses to which the consumer may write data (the range thus denotes a recordable data quantity) is prescribed by a limit count register managed on the consumer side, as will be described later.

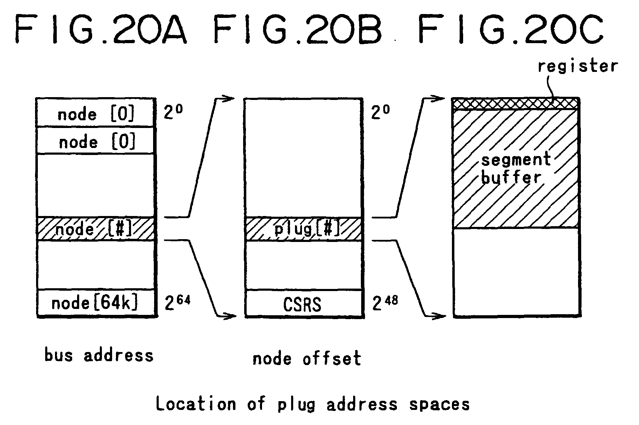

FIGS. 20A to 20C depict a structure of plug address spaces for asynchronous communication.

A 64-bit plug address space is divided as shown in FIG. 20A into as many as 2¹⁶ (64K) nodes, in such a manner that a plug is found in the address space of each node as depicted in FIG. 20B. Each plug includes a register indicated by braided lines and a segment buffer shown shaded as illustrated in FIG. 20C. The register accommodates information (e.g., transmitted data size and receivable data size) necessary for exchanging data between the transmitting side (producer) and the receiving side (consumer), as will be explained later. The segment buffer is an area to which to write the data sent from the producer to the consumer. It is stipulated illustratively that a minimum segment buffer size is 64 bytes.

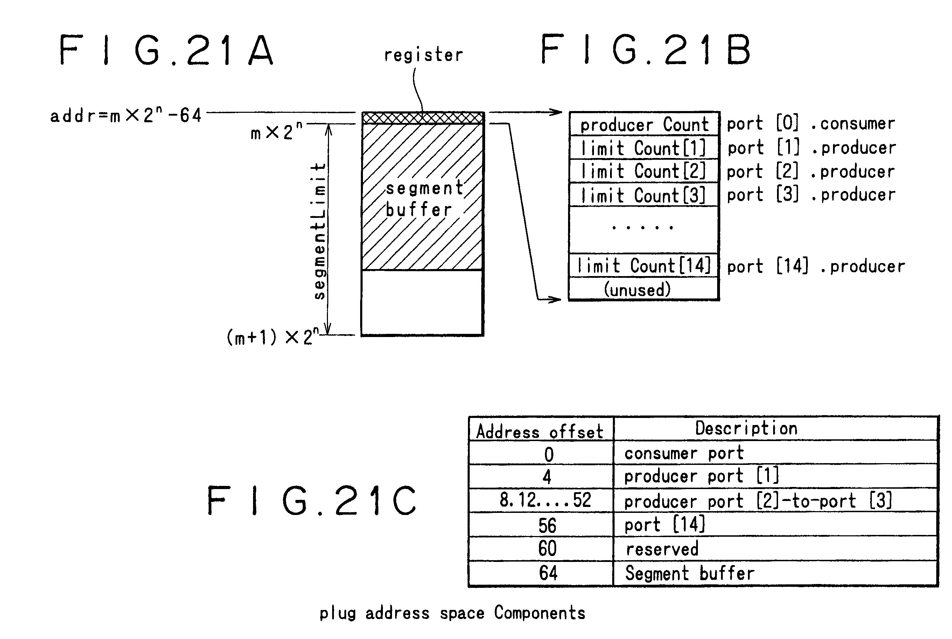

FIG. 21A shows a typical plug address whose content is the same as that in FIG. 20C.

As shown in FIG. 21A, a plug address is headed by the register which is followed by the segment buffer.

An internal structure of the register, as indicated in FIG. 21B, is headed by a 32-bit producer count register followed by limit count registers [1] through [14] of 32 bits in size each. That is, one producer count register and 14 limit count registers make up the register. In this structure, an unused region comes behind the limit count register [14].

The plug structure illustrated in FIGS. 21A and 21B is designated by offset addresses shown in FIG. 21C.

Offset address 0 specifies a consumer port (producer count register) while offset addresses 4, 8, 12 through 56 designate producer ports [1] through [14]. Offset address 60 designates an unused region defined as reserved. Offset address 64 designates a segment buffer.

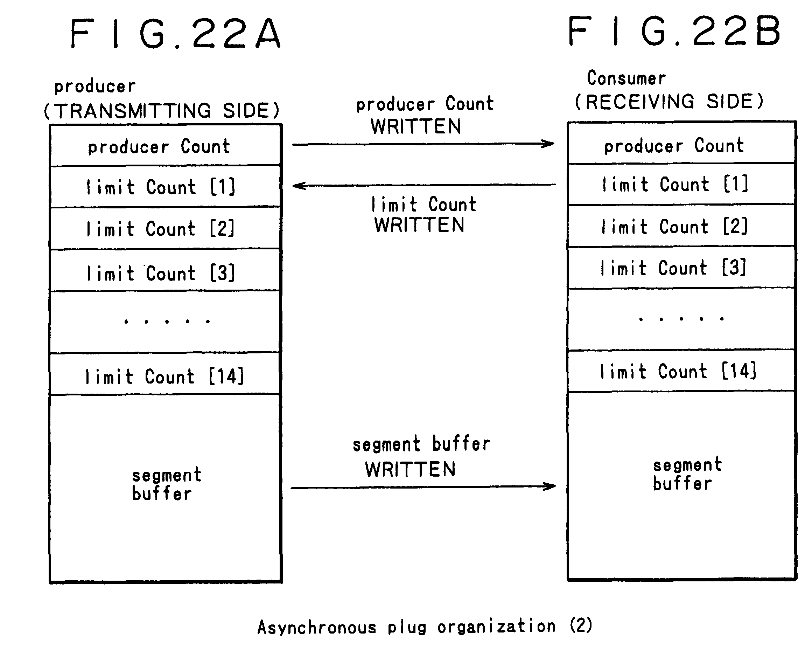

FIGS. 22A and 22B show plug structures for both the producer and the consumer.

With such plug structures in effect, asynchronous communication is implemented by writing data to the producer count register, to the limit count registers and to the segment buffer in keeping with data exchange procedures which will be described later. The write operations fall under the category of the write transaction described above.

The producer writes data to the producer count register of the consumer.

More specifically, the producer first writes information about data transmission on the producer side to the producer count register at an address specific to the producer. The content of the producer count register is then written to the producer count register on the consumer side.

The producer count register accommodates the size of data to be written in a single write operation by the producer to the segment buffer of the consumer. That is, the producer that writes data to the producer count register performs a process of reporting the size of data to be written to the consumer segment buffer.

In response, the consumer writes data to the limit count registers of the producer.

More specifically, the consumer first writes the size of its segment buffer to one of the limit count registers 1 through 14 (register [n]) which is designated corresponding to the producer. The content of the limit count register [n] is then written to the limit count register [n] of the producer.

In accordance with the data written to its limit count register [n], the producer determines the size of data to be written in a single write operation illustratively to its own segment buffer. The content of the segment buffer is in turn written to the segment buffer of the consumer. The write operation to the consumer segment buffer constitutes a data transmission of asynchronous communication.

### 2-13 Asynchronous Connection Transmission Procedures

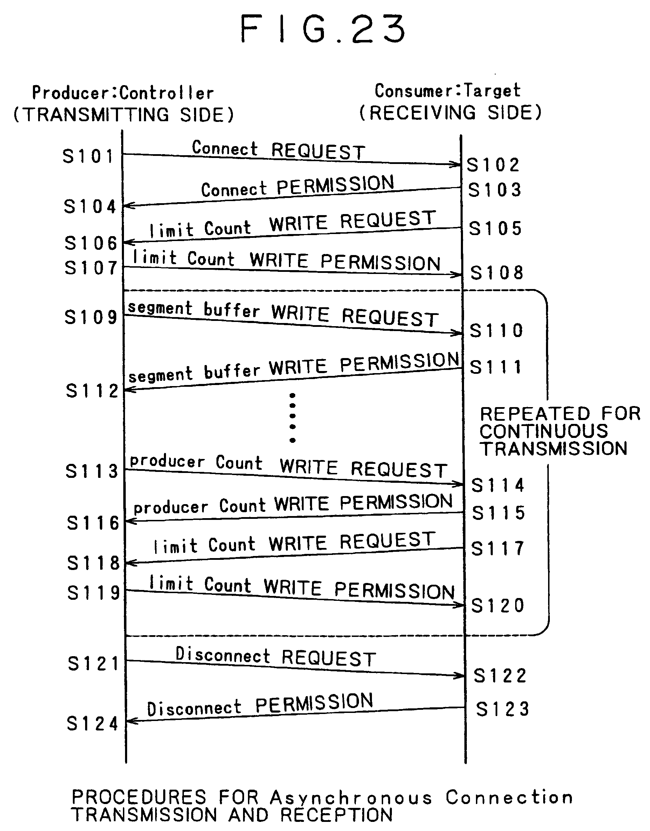

Described below with reference to a process transition diagram in FIG. 23 are basic procedures for transmission and reception by asynchronous connection where the inter-plug (i.e., producer-consumer) structure of FIGS. 22A and 22B is assumed to be established.

The transmission and reception procedures shown in FIG. 23 are implemented using AV/C commands (write request packets) in an environment stipulated by the FCP for asynchronous communication. AUX data handled by this embodiment are transmitted and received by use of the procedures within the IEEE 1394 system. It should be noted that the processing shown in FIGS. 22A and 22B indicates only communicating operations by means of asynchronous connection, a communication process addressing the recording and playback of AUX data will be described later.

In an actual asynchronous connection setup, acknowledgements are sent and received following command transmissions as shown in FIG. 15. The setup of FIG. 23 omits illustration of acknowledgement exchanges for purpose of simplification.

For the IEEE 1394 interface, inter-plug (i.e., device-to-device) connective relations include controller-target relations in addition to the above-described producer-consumer relations. In the IEEE 1394 system, the devices established in producer-consumer relations may or may not coincide with the devices that are arranged in controller-target relations. In other words, there may exist a device stipulated to offer controller functions in addition to the devices designated as producers. In this example, however, it is assumed that the producer-consumer relations coincide with the controller-target relations.

In step S101 in the transmission procedures of FIG. 23, a producer transmits a connect request to a consumer. The connect request is a command sent by the producer to the consumer for requesting a connection therebetween. The command informs the consumer of a register address of the producer.

The connect request is received by the consumer in step S102, whereupon the consumer recognizes the address of the register on the producer side. In step S103, the consumer transmits in response a connect permission to the producer. Upon receipt of the connect permission by the producer in step S104, a connection is established between the producer end the consumer for subsequent data transmission and reception thereby.

With the connection set up as described above, the consumer transmits a limit count register (abbreviated to the limit count hereinafter) write request to the producer in step S105. After receiving the limit count write request in step S106, the producer transmits a limit count write permission to the consumer in step S107. In step S108, the consumer receives the limit count write permission. The sending of the limit count write request followed by the write permission is a process that determines the size of data to be written later to the segment buffer (i.e., segment buffer size).

In step S109, the producer transmits a segment buffer write request to the consumer. The segment buffer write request is received by the consumer in step S110. In response, the consumer transmits a segment buffer write permission to the producer in step S111. The producer receives the segment buffer write permission in step S112.

Carrying out steps S109 through S112 completes a single process of writing data from the segment buffer of the producer to the segment buffer of the consumer.

In steps S109 through S112, the data are written by transmission of a single asynchronous packet shown in FIG. 9. If the data size transferred in an asynchronous packet is less than the data size designated by the limit count register and if the transmission of the necessary data is not complete using the single asynchronous packet_{,} then steps S109 through S112 are repeated until the segment buffer capacity is full.

When the write operation to the segment buffer is completed in steps S109 through S112, step S113 is carried out in which the producer transmits a producer count register (abbreviated to the producer count hereinafter) write request to the consumer. The consumer receives the producer count write request in step S114 and performs a write operation to its producer count register. In step S115, the consumer transmits a producer count write permission to the producer. The producer receives the producer count write permission in step S116.

The process above notifies the consumer of the data size transferred in steps S109 through S112 from the producer to the consumer segment buffer.

In step S117, a process is initiated to perform a limit count write operation following the producer count write process made up of steps S113 through S116. Specifically, as shown in steps S117 through S120, a limit count write request is transmitted from the consumer to the producer. In response, the producer transmits a limit count write permission to the consumer.

Steps S109 through S120 above constitute a single set of procedures for data transmission by asynchronous connection. If the size of data to be transmitted is greater than the segment buffer size and if the transmission of the data is not complete in a series of steps S109 through S120, then steps S109 through S120 are repeated until the data transmission is completed.

When the data transmission is completed, the producer in step S121 transmits a disconnect request to the consumer. The consumer receives the disconnect request in step S122, and transmits a disconnect permission in step S123. The producer receives the disconnect permission in step S124, which completes the data transmission and reception by asynchronous connection.

### 3. Control Program

### 3-1 Overview

As described with reference to FIG. 1, the personal computer 113 has (is installed with) the application software (a program) for controlling (in a remote control manner) the audio devices connected to the personal computer 113 through the IEEE 1394 bus 116. Execution of this program may also realize control of plural audio devices. It should be noted that this remote control program is hereinafter refereed to as a "control program".

For the control program according to the embodiment, a so-called object-oriented programming system (hereinafter abbreviated to OOPS) is used.

Object-oriented programming is known as a computer programming packaging technique for supplying reusable, easy-to-expand programs.

For example, unlike other conventional programming techniques that cannot easily be adapted to new functional requirements and data of new types, the object-oriented programs are considered to be reusable and expandable every time a new requirement occurs.

In the other conventional programming techniques, a method to be executed on a particular data set is highlighted, for example. On the contrary, a real-world (substantiated) object having attributes and actions working on them is highlighted in OOPS.

An object herein denotes a data structure including information associated with an entity of interest of a particular system and its user. Objects having a like characteristic and a common action are known as instance objects belonging to an object class. Therefore, each instance object (namely the substance of an object) includes information associated with entities within a system and a class object includes information associated with an instance object.

In an object-oriented programming system, an action is achieved by sending an action request (or a message) to an object which includes or seals in data. Following the specifications issued by the action request, this object executes the requested action on the data. At this juncture, the action requesting side need not know how the actual data look or how the object operates the data.

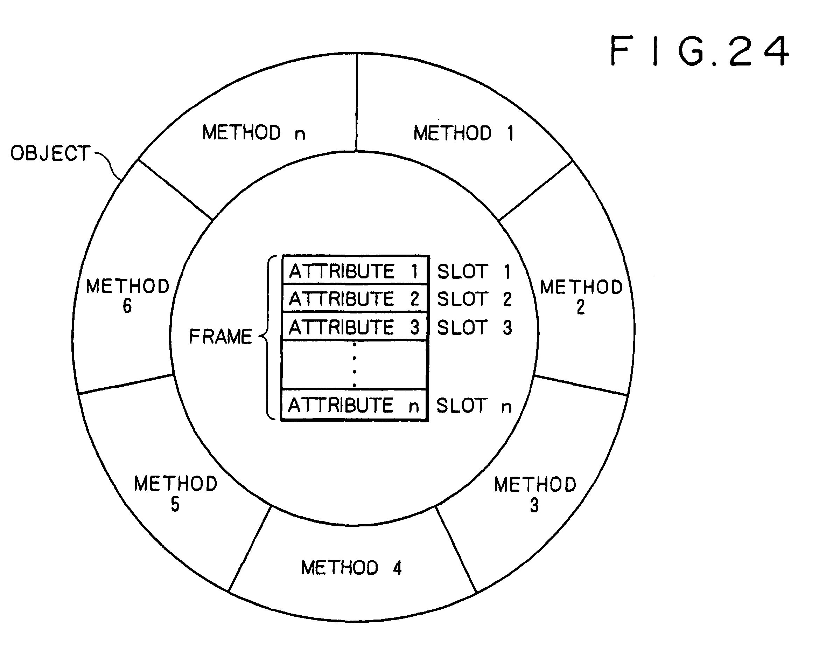

Referring to FIG. 24, there is shown a schematic representation of one object.

An object herein denotes a data structure and a set of operations for accessing this data structure. The frame of this object is encapsulated by methods. A method is an action (or a function) capable of accessing the data structure of the object.

The data structure as an object can be represented as a frame having many slots, each slot including the attribute of the data included therein. The attribute is a basic element, namely an integer or a sequence, or an object as a pointer to another object instance (namely a substance).

Because of the above-mentioned structure, the main characteristic of OOPS is sometimes referred to as encapsulation. As described, the frame is encapsulated by the methods arranged around each individual piece of data, access to the frame being handled by the surrounding methods.

Because only the methods of a particular object are allowed to access the data structure of that object, the data acquire their independence. The data structure inside an object can be known only by the methods associated with that object.

In OOPS, a message for telling an object what to do is sent to that object, requiring it to execute one of the methods owned by that object. In response, the object selects the method on which the received message is to be executed. Upon execution of the method, the object returns control to a called routine along with the execution result of that method.

### 3-2 Configuration of control program

The following describes a control program on the basis of the above-mentioned OOPS according to the present embodiment.

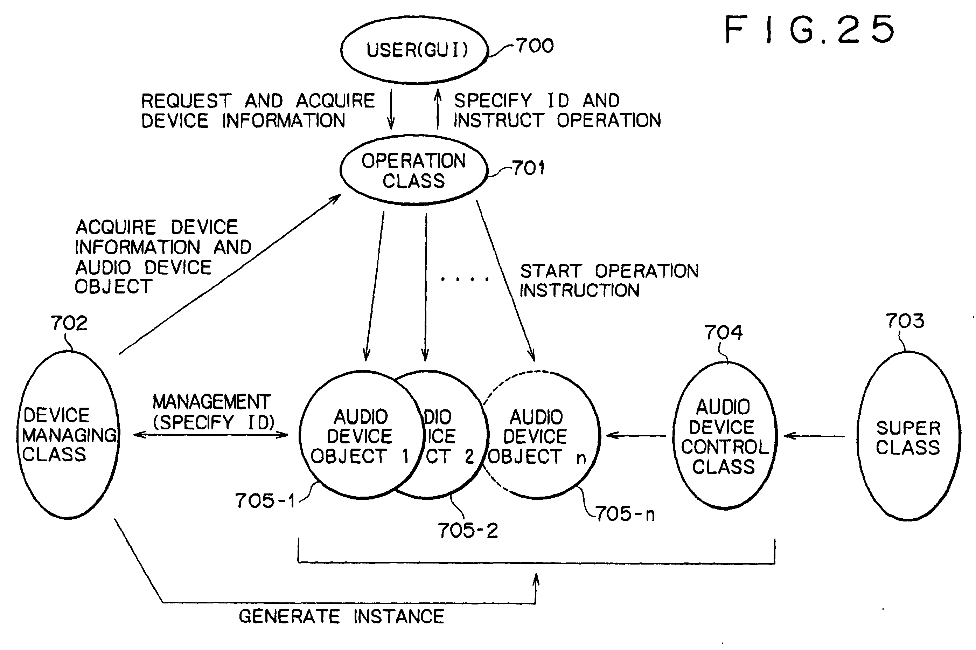

Referring to FIG. 25, the control program according to the present embodiment is schematically illustrated.

As is known, OOPS has a concept called a "class". This class is grasped as a model for generating an object. Imparting a specific attribute to the class generates an object as a substance (namely, an instance object).

The control program of the present embodiment has following classes as illustrated in FIG. 25.

Operation class 701 receives an operation for controlling an audio device.

Device managing class 702 detects an audio device (or simply a device) existing on the IEEE 1394 bus to generate and manage an audio device object to be described later.

Super class 703 abstracts audio device control.

Audio device control class 704 executes the audio device control deprived from the super class.

The above-mentioned classes operate as follows.

First, when the control program starts, the operation class 701 and the device managing class 702 are in a still state where only one instance (or substance) exists for example.

The device managing class 702 detects audio devices on the IEEE 1394 bus 116. For the detected audio device, the audio device control class 704 generates audio device objects 705-1 through 705-n, which are instance objects.

Namely, as shown as audio device objects 1 through n in the figure, two or more audio device objects can be generated in accordance with the number of audio devices detected as existing on the IEEE 1394 bus 116.

The generated audio device objects are uniquely numbered (namely, IDs are assigned) for control. It is assumed here that the device managing class 702 has device information composed of at least the number of detected devices (namely, audio devices) and the IDs assigned to them.

It should be noted that the audio devices for which audio device objects are created need not be of a same type.

For example, when an MD player/recorder and a CD player are connected to the IEEE 1394 bus, the audio objects can be created for both of these devices despite the difference in type.

To realize this feature, program contents usable between devices of different types are created beforehand as the audio device control class 704 as shown in FIG. 25 for example. And an arrangement is made before hand for detecting the types of audio devices connected to the bus. To create audio device objects by use of the audio device control class 704, the attributes adapted to the types of detected devices may only be set.

When a user 700 (indicative of a user application (an operating GUI)) has operated a certain audio device, the user 700 requests the operation class 701 for the device information (for example, the number of audio devices and the IDs of audio device objects) about the currently managed audio devices. In response, the operation class 701 retrieves the device information from the device managing class 702 and sends the device information to the user 700. Receiving the device information, the user 700 specifies the audio device ID and then instructs the operation class accordingly.

The operation class 702 acquires the audio device object 705 having the ID specified by the user 700 from the device managing class 702. Then, the operation class starts an operational instruction on the acquired audio device object 705.

The above-mentioned processing allows the operation (namely, remote control) of any audio device connected to the IEEE 1394 only by specifying its ID from the user 700.

It should be noted that, actually, the operation class 701 and the device managing class 702 are made objects as the operation object 701 and the device managing object 702 respectively before the execution of the above-mentioned operation.

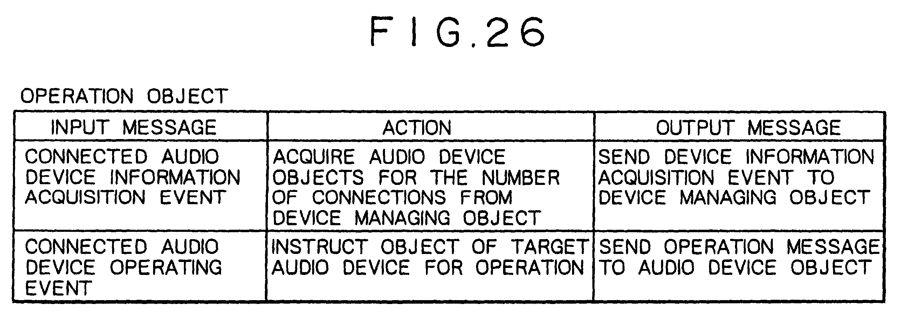

The following describes the exemplary settings of input message, action, and output message for each of the operation object (or the operation class) 701, the device managing object (or the device managing class) 702, and the audio device object 705 corresponding to the above-mentioned operations with reference to FIGS. 26 through 28.

If an information acquisition event of an audio device connected to the bus is obtained as an input message as shown in FIG. 26, the operation object 702 acquires the audio device object 705 for the number of bus-connected audio devices from the device managing object 702 as an action. Then, the operation object sends the device information acquisition event to the device managing object 702 as an output message.

If an operation event for a bus-connected audio device is an input message, the operation object sends as an action an operation instruction to the audio device object 705 of the corresponding audio device. Then, the operation object sends a required operation message such as PLAY for example to the audio device object 705 as an output message.

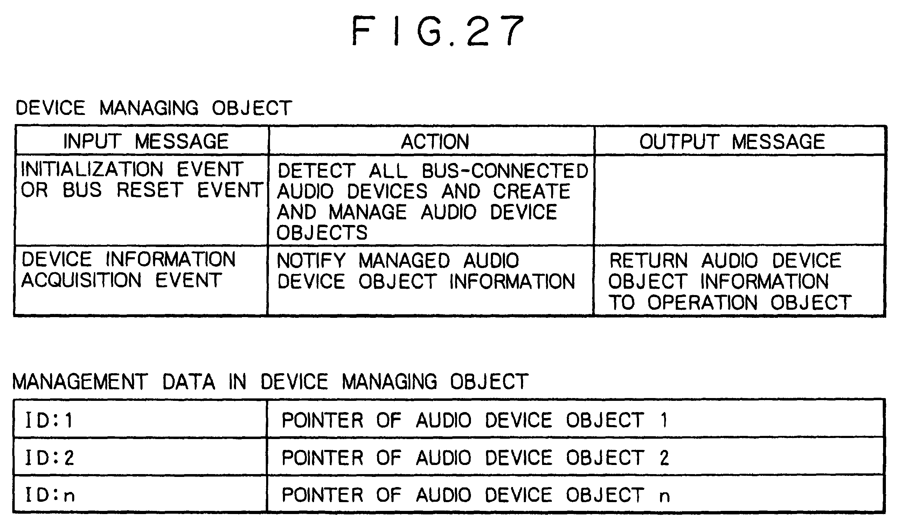

If an input message is of an initialization event or a bus reset event as shown in FIG. 27, the device managing object 702 detects all bus-connected audio devices as an action and generates the audio device object 705 for each of these detected audio devices for management.

If an input message is of a device information acquisition event, the device managing object sends, as an action, information (or device information) about the audio device object 705 that the device managing object manages. As an output message, the device managing object returns the information (device information) about the audio device object to the operation object 701.

Management data inside the device managing object 702 are shown in the lower half of FIG. 27. In the management data, IDs unique to the generated audio device objects 705-1 through 705-n are set as ID:1 (pointer of audio device object 1), ID:2 (pointer of audio device object 2), ..., ID:n (pointer of audio device object n) as described above.

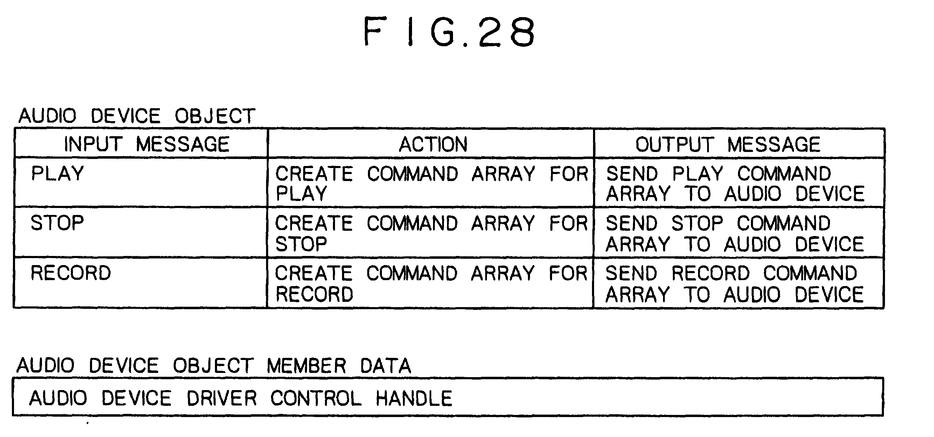

Referring to FIG. 28, there is shown a case of the audio device object 705.

It is assumed here that PLAY (start reproduction), STOP (stop recording/reproduction), and RECORD (start recording) are defined as input messages by way of example.

When PLAY has been obtained as an input message, a command array for PLAY is created as an action. To be more specific, in accordance with the formats described with reference to FIGS. 16 through 18B, an AV/C command packet is created having the contents of PLAY commands. Then, the PLAY command array is sent as an output message to an audio device to be operated.

When STOP and RECORD have been obtained as input messages, a command array corresponding to the input messages is created by an action in the same manner as described above. The created command array is sent by an output message to an audio device to be operated.

As shown in the lower half of FIG. 28, an audio device driver control handle is defined as member data of audio device object.

It should be noted that the definitions in the objects shown in FIGS. 26 through 28 are for only the convenience of description and therefore indicate only the contents sufficient for executing a particular program operation. Consequently, the actual object definitions may differ from those shown in FIGS. 26 through 28. For example, in the case of the audio device object 705 associated with an MD recorder/player, ERASE (track erasure), COMBINE (track combination), and DIVIDE (track division) may actually be defined in correspondence with various commands for editing programs (or tracks) recorded on a disc, in addition to the above-mentioned PLAY, STOP, and RECORD.

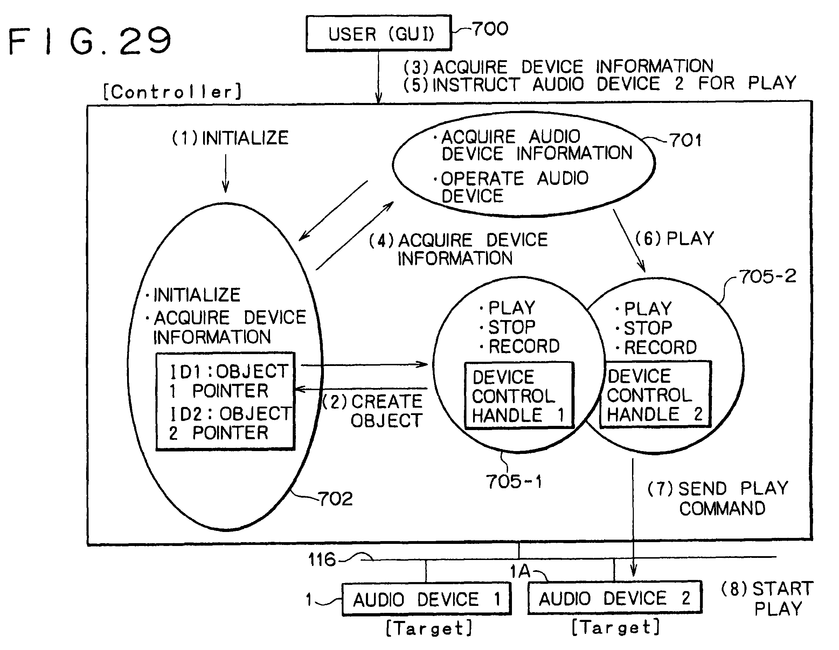

On the basis of the description made above, the following describes an example of the operation of the control program shown in FIG. 1 with reference to FIG. 29. In this example, the MD recorder/player 1A is remotely controlled for PLAY (start reproduction) by the personal computer 113.

It should be noted that, with reference to FIG. 29, the operations similar to those previously described with reference to FIG. 25 are denoted by the same reference numbers.

With reference to FIG. 29, the control program on the personal computer 113 is handled as a controller specified by the IEEE 1394 data interface format and the MD recorders/players 1 and 1A, the devices to be remotely controlled, are handled as targets.

The operation of the control program and the required operations obtained by the control program operations are denoted by procedures (1) through (8). The following describes these procedures in this order.
Procedure (1): The device managing object 702 clears the contents of management so far made for example as initialization processing when the control program starts or a bus reset takes place.
Procedure (2): The device managing object 702 detects audio devices which are targets existing on the IEEE 1394 bus 116. Here, tow devices, MD recorders/players 1 and 1A are detected. For the detected devices, the device managing object 702 creates audio device objects, which are instance objects. Here, the device managing object 702 creates two audio device objects 705-1 and 705-2 for the MD recorders/players 1, and 1A respectively.
   Then, in accordance with the example shown in FIG. 28, the audio device objects 705-1 and 705-2 are given attributes for permitting remote control for PLAY, STOP, and RECORD. These attributes are defined as device control handle 1 and device control handle 2 as shown for example for the audio device object 705-1 and the audio device object 705-2 respectively.
   The device managing object 702 also sets ID:1 (the pointer or the audio device object 1) and ID:2 (the pointer of the audio device object 2) for the audio device object 705-1 and the audio device object 705-2 created by the device managing object to manage them.
Procedure (3): When the procedure (1) and the procedure (2) have been completed, the user 700 acquires the device information about the audio devices (namely, the targets) connected to the IEEE 1394 bus. For this purpose, the user 700 sends a device information acquisition request to the operation object 701.
Procedure (4): Receiving the device information acquisition request from the user 700, the operation object 701 acquires the device information from the device managing object 702 and sends it back to the user. This substantially ends the acquisition of the device information by the user 700 as the procedure (3).
Procedure (5): It is assumed that, in this case, as an operation of the user 700 after the acquisition of the device information, a PLAY command is given to the MD recorder/player 1A. To be specific, the user 700 specifies ID:2 and then issues a PLAY command to the operation object 701.
Procedure (6): The operation object 701 acquires the audio device object 705-2 indicated by ID:2 from the device managing object 702 and executes a PLAY operating method on the acquired audio device object 705-2.
Procedure (7): In response to the PLAY operating method executed by the procedure (6) above, the audio device object 705-2 creates a PLAY command (a command array) as an AV/C command packet as described before. Then, the audio device object 705-2 sends the created PLAY command to the MD recorder/player 1A through the IEEE 1394 bus 116.
Procedure (8): Receiving the PLAY command, the MD recorder/player 1A reproduces the MD 90. This reproducing operation is executed by the system controller 11 in the MD recorder/player 1A upon reception of the PLAY command through the IEEE 1394 interface 25.

As seen from the description above, in the present embodiment, OOPS is applied as the control program to create the audio device object 705 having the action and output message for creating remote control commands and send them to the audio devices connected to the IEEE 1394 bus as substantiated instance objects.

Given such a configuration, only creating from class an audio device object (or an instance) for each bus-connected device can execute the above-mentioned processing not only where only one audio device is connected to the bus but also where two or more audio devices are connected to the bus.

In such processing, if a device is attached to or removed from the bus for example, the current device connection state can be detected at the time of resultant bus reset to newly creating an audio device object, thereby providing appropriate remote control on the plural bus-connected devices after the bus reset. Namely, this configuration is flexibly compatible with so-called Plug And Play technology. In addition, this configuration does not especially require user's manual setting changes.

### 3-3 Processing operation

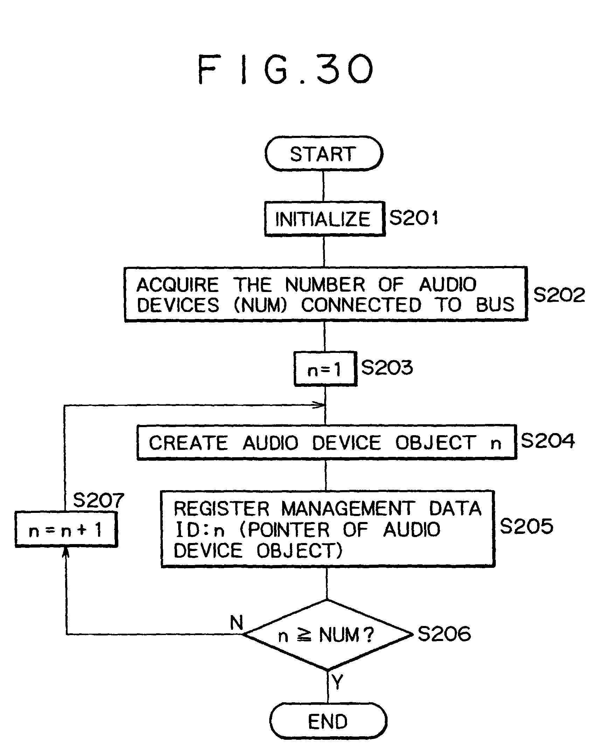

Referring to FIG. 30, there is shown a flowchart describing the creation of audio device objects described with reference to the procedures (1) and (2) above. The processing described by this flowchart is executed by the CPU 201 of the personal computer 113 with the controlled program operating.

As described with reference to FIG. 29, the CPU 201 executes initialization upon start of the control program of occurrence of bus reset. This initialization is step S201.

In step S202, the CPU 201 detects the audio devices on the IEEE 1394 bus 116 to acquire the number of audio devices NUM on the IEEE 1394 bus 116.

Then, in step S203, the CPU 201 sets variable n indicative of the number of an audio device object to be created to 1.

In step S204, the CPU 201 creates audio device object n. If n = 1, a first audio object 1 is created. The creation processing was described before with reference to FIGS. 25 and 29 and therefore will be described no more.

When the creation of audio device object n in step S204 has been completed, then, in step S205, the CPU 201 registers management data for the program as the device managing object (class) 702 to manage audio device object n. Namely, ID:n (the pointer of audio device object n) is set to audio device object n and held.

By the processes of step S204 and step S205, one audio device object n is created and managed.

In step S206, the CPU 201 determines whether N ≧ NUM is found between variable n and the number of audio devices NUM. If the decision is negative, it indicates that there still remain audio devices for which audio device objects are to be created. Therefore, in step S207, the CPU 201 increments variable n by one and returns to the processing of step S204, creating a next audio device object.

When the creation of audio device objects for all audio devices on the bus has been completed and the decision in step S206 is affirmative, the CPU 201 exits this processing and passes control to a next required processing routine.

It should be noted that the present invention is not limited to the configuration of the embodiment described above. For example, the present embodiment uses a personal computer as the controller for executing the control program. It will be apparent to those skilled in the art that the control program may alternatively be executed by some device such as an AV amplifier that can be connected to the IEEE 1394 bus.

In the above-mentioned embodiment, the external equipment to be remotely controlled is audio equipment. It will be apparent to those skilled in the art that non-audio equipment may also be remotely controlled.

It will also be apparent to those skilled in the art that the data interface is not limited to IEEE 1394. Any other data interfaces are applicable to the invention if they can handle two or more interconnected devices as existing on one data bus.

As mentioned above and according to the invention, an audio device control class (the first control program), which is an entity abstracted as a program for controlling audio devices (or external devices) in accordance with an object-oriented programming systems for example, is prepared. Then, for each of the devices (namely, the external devices to be controlled) found on a data bus, an audio device object (the second control program), which is a substantiated existence (or instance) that can actually send a control command to the external device to be controlled, is created by use of the audio device control class.

In actual control of audio devices, the corresponding audio device objects send commands for control.

Creating an audio device object for each of the connected devices easily realizes control of two or more devices on a data bus by one controller (for example, a personal computer). In addition, this novel configuration flexibly adapts to a situation in which devices connected to the data bus are replaced, added, or removed, only by reconstructing the audio device objects for the audio devices newly detected on the data bus.

## Claims

1. An external device control apparatus capable of executing a predetermined control operation on one or more predetermined external devices interconnected via a data bus compliant with a predetermined communication format, comprising:
abstraction control program holding means for holding a first control program for controlling said one or more predetermined external devices, said first control program being defined as an abstracted entity;
connected device detecting means for detecting a target external device controllable by said control apparatus, said target external device existing on said data bus; and
control program substantiating means for creating a second control program for controlling said target external device detected by said connected device detecting means, by use of said first control program, said second control program being defined as a substantiated entity.

2. An external device control method for an external device control apparatus capable of executing a predetermined control operation on one or more predetermined external devices interconnected via a data bus compliant with a predetermined communication format, comprising the steps of:
holding a first control program for controlling said one or more predetermined external devices, said first control program being defined as an abstracted entity;
detecting a target external device controllable by said control apparatus, said target external device existing on said data bus; and
creating a second control program for controlling said target external device detected in the connected device detecting step, by use of said first control program, said second control program being defined as a substantiated entity.
